# EUROPEAN PATENT APPLICATION

(11) **EP 4 199 562 A1**
(43) Date of publication of application: **21.06.2023**
(21) Application number: 21865787.2
(22) Date of filing: 12.08.2021
(51) Int. Cl.: H04W 8/00, H04L 45/74

(54) **METHOD FOR TRANSMITTING DATA AND ELECTRONIC DEVICE**

(30) Priority: 10.09.2020 CN 202010949676; 08.12.2020 CN 202011423212
(71) Applicant: Huawei Technologies Co., Ltd., Shenzhen, Guangdong 518129 (CN)
(72) Inventor: WEI, Zhiyu, Shenzhen, Guangdong 518129 (CN)
(74) Representative: MERH-IP Matias Erny Reichl Hoffmann Patentanwälte PartG mbB
(86) International application number: PCT/CN2021/112168
(87) International publication number: WO 2022/052731

(57) **Abstract**

This application provides a data transmission method and an electronic device. The method includes: Each electronic device may form a network topology relationship in advance. In this way, when a first electronic device and a second electronic device in the network topology relationship communicate with each other, path information for implementing communication between the two electronic devices may be determined based on the network topology relationship. The network topology relationship may include a plurality of electronic devices and a network connection supported by two adjacent electronic devices in the plurality of electronic devices. In this way, the first electronic device and the second electronic device may directly transmit first data based on the path information determined based on the network topology relationship. This avoids a delay caused when two electronic devices need to first discover one or more modes of network connection between the two electronic devices and then select a proper network connection from the one or more network connection modes for establishment, and helps reduce a data transmission delay.

## Description

This application claims priority to Chinese Patent Application No. 202010949676.0, filed with the China National Intellectual Property Administration on September 10, 2020 and entitled "DATA TRANSMISSION METHOD AND APPARATUS", and Chinese Patent Application No. 202011423212.2, filed with the China National Intellectual Property Administration on December 8, 2020 and entitled "DATA TRANSMISSION METHOD AND ELECTRONIC DEVICE", which are incorporated herein by reference in their entireties.

### TECHNICAL FIELD

This application relates to the communications field, and more specifically, to a data transmission method and an electronic device in the communications field.

### BACKGROUND

With development of networks and electronic devices, data may be transmitted between electronic devices in different transmission manners. Different types of electronic devices may appear in a scenario. For example, electronic devices such as a mobile phone, a television, a band, a sound box, and a watch may appear in a home network. When data needs to be transmitted between electronic devices, a mode of connection between the electronic devices needs to be first discovered. For example, the electronic devices may be connected by using Bluetooth, WiFi, a universal serial bus (universal serial bus, USB), or the like. The electronic device needs to first automatically discover connection modes, select a connection mode from these connection modes, then establish a connection, and transmit data by using the established connection. This causes a relatively long transmission delay.

### SUMMARY

Embodiments of this application provide a data transmission method and an electronic device, to reduce a transmission delay.

According to a first aspect, a data transmission electronic device is provided. The method may be executed by a first electronic device. The first electronic device may be an apparatus that can support an electronic device in implementing a function required by the method, for example, a chip system. The method includes: The first electronic device in a plurality of electronic devices determines, based on a network topology relationship, information about a path for transmitting first data to a second electronic device in the plurality of electronic devices and a mode of network connection between two adjacent electronic devices on a transmission path indicated by the path information, where the path information is used to indicate an electronic device through which the first electronic device transmits the first data to the second electronic device, and the network topology relationship includes the plurality of electronic devices and a mode of network connection between the plurality of electronic devices.

The first electronic device transmits the first data to the second electronic device based on the path information and the mode of network connection between two adjacent electronic devices on the transmission path indicated by the path information.

In the foregoing solution, all electronic devices may perform networking in advance on different network connections supported by the electronic devices, to form a network topology relationship. In this way, the first electronic device and the second electronic device in the network topology relationship may communicate with each other based on the network topology relationship. The network topology relationship may include a plurality of electronic devices and a network connection between any two of the plurality of electronic devices. In this way, the first electronic device and the second electronic device directly transmit the first data based on the network connection in the network topology relationship. This avoids a delay caused when two electronic devices need to first discover one or more modes of network connection between the two electronic devices and then select a proper network connection from the one or more network connection modes for establishment, and helps reduce a data transmission delay.

Optionally, the first electronic device is any electronic device in the plurality of electronic devices.

Optionally, the first electronic device may predetermine the network topology relationship, or a central node in the plurality of electronic devices may determine the network topology relationship and send to the first electronic device.

Optionally, the first electronic device may store a network topology relationship, and the network topology relationship may be updated or not updated.

Optionally, any one of the plurality of electronic devices stores a network topology relationship, and the stored network topology relationships are the same.

Optionally, the plurality of electronic devices may exchange information directly or indirectly. The exchanged information may include information used to determine a network topology relationship or information used to determine path information.

Optionally, the plurality of electronic devices may periodically exchange information or exchange information when information changes.

Optionally, the transmission path indicated by the path information includes at least two electronic devices. For example, the transmission path may include only the first electronic device and the second electronic device, or may include an electronic device other than the first electronic device and the second electronic device.

In some possible implementations, before the first electronic device in the plurality of electronic devices determines, by using the network topology relationship, the information about the path for transmitting the first data to the second electronic device in the plurality of electronic devices and the mode of network connection between two adjacent electronic devices on the transmission path indicated by the path information, the method further includes: The first electronic device obtains basic information of each electronic device in the plurality of electronic devices and network capability information of each electronic device.

The first electronic device determines the network topology relationship based on the basic information of each electronic device and the network capability information of each electronic device.

Optionally, the basic information of each electronic device is used to identify the electronic device.

In some possible implementations, the basic information of each electronic device includes at least one of an identifier of the electronic device, a name of the electronic device, a network identifier of the electronic device, a type of the electronic device, weight information of the electronic device, role information of the electronic device, and version information of the electronic device.

In some possible implementations, the network capability information of each electronic device includes at least one of a network connection supported by the electronic device, a bandwidth supported by the network connection supported by the electronic device, connection information of the network connection supported by the electronic device, a connection status of the network connection supported by the electronic device, and connected-state network connection time information.

In some possible implementations, that a first electronic device obtains basic information of each electronic device in the plurality of electronic devices and network capability information of each electronic device includes:
The first electronic device establishes a first network connection to a third electronic device in the plurality of electronic devices.

The first electronic device receives, by using the first network connection, basic information of the third electronic device and network capability information of the third electronic device that are sent by the third electronic device, or receives, by using the first network connection, basic information of the third electronic device, network capability information of the third electronic device, basic information of a fourth electronic device in the plurality of electronic devices, and network capability information of the fourth electronic device that are sent by the third electronic device.

The first electronic device sends basic information of the first electronic device and network capability information of the first electronic device to the third electronic device by using the first network connection.

In the foregoing solution, the first electronic device may exchange information of the first electronic device with the third electronic device by using the connected first network connection, and the third electronic device may exchange information of the third electronic device with the first electronic device by using the established first network connection, or may exchange information of the third electronic device and information of another electronic device (information of the fourth electronic device). In other words, information exchanged by a plurality of electronic devices may be directly exchanged or indirectly exchanged by using an intermediate device. A form of information exchange is not limited in this embodiment of this application.

The first network connection may be a network connection supported by both the first electronic device and the third electronic device.

In some possible implementations, before the first electronic device establishes the first network connection to the third electronic device in the plurality of electronic devices, the method further includes:
The first electronic device periodically sends a message, where the message carries a device identifier of the first electronic device.

The first electronic device receives a response message sent by the third electronic device, where the response message is sent by the third electronic device after the third electronic device receives the message periodically sent by the first electronic device, and the response message carries a device identifier of the third electronic device.

The first electronic device determines, based on the device identifier of the third electronic device, that the third electronic device is online.

In the foregoing solution, before exchanging information with the third electronic device, the first electronic device needs to first determine whether the first electronic device and the third electronic device are online, and exchange information only in an online condition.

In some possible implementations, the first electronic device may further obtain information about whether each electronic device is online, and the first electronic device determines, according to whether each electronic device is online and a network topology relationship, information about a path for transmitting first data to a second electronic device in the plurality of electronic devices and a mode of network connection between two adjacent electronic devices on a transmission path indicated by the path information.

Optionally, the information about whether each electronic device is online may be understood as whether each electronic device can be detected by another electronic device.

In some possible implementations, the method further includes: The first electronic device obtains at least one of processing capability information of each electronic device in the plurality of electronic devices, network quality of each electronic device, and power information of each electronic device.

That the first electronic device in a plurality of electronic devices determines, based on a network topology relationship, information about a path for transmitting first data to a second electronic device in the plurality of electronic devices includes: The first electronic device determines, based on the network topology relationship and the at least one of the processing capability information of each electronic device, the network quality of each electronic device, and the power information of each electronic device, the information about the path for transmitting the first data to the second electronic device.

In the foregoing solution, the first electronic device may determine, based on at least one of network quality, processing capability information, and power information of each electronic device, the information about the path for transmitting the first data by the first electronic device to the second electronic device, so that a global path can be planned, thereby facilitating accurate data transmission.

Optionally, the processing capability information of each electronic device is used to indicate a processing capability of each electronic device, for example, including power consumption, a chip processing capability, and a memory of the electronic device.

Optionally, the network quality of each electronic device indicates network quality of an environment in which each electronic device is currently located. The network quality of each electronic device varies in different environments. For example, the network quality of each electronic device varies in a tunnel and an open area. The network quality includes a connection rate and signal strength.

Optionally, the power information of each electronic device indicates current remaining power of each electronic device, power availability duration of each electronic device, or the like.

In some possible implementations, that the first electronic device transmits the first data to the second electronic device based on the path information and the mode of network connection between two adjacent electronic devices on the transmission path indicated by the path information includes:
The first electronic device sends, by using a second network connection, a first packet to a fifth electronic device adjacent to the first electronic device on the transmission path, where a packet body of the first packet includes the first data, a packet header of the first packet includes the path information and the mode of network connection between two adjacent electronic devices on the transmission path indicated by the path information, so that the fifth electronic device determines a next-hop node on the transmission path and a mode of network connection between the fifth electronic device and the next-hop node. The second network connection is a mode of connection between the first electronic device and the fifth electronic device on the transmission path indicated by the path information.

The packet header of the first packet further includes at least one of a source address, a destination address, a service identifier, and a service type, the source address is an address of the first electronic device, the destination address is an address of the second electronic device, the service identifier is used to uniquely identify a service corresponding to the first data, and the service type is used to identify a service type corresponding to the first data.

In the foregoing solution, the first electronic device may add, to the packet header of the first packet, the path information determined based on the network topology relationship and the mode of network connection between two adjacent electronic devices on the transmission path supported by the path information, and send to the fifth electronic device. The fifth electronic device may determine the next-hop node and the mode of network connection based on the information carried in the packet header, and establish the network connection to the next-hop node of the fifth electronic device. Similarly, the fifth electronic device may still continue to send, to the next-hop node by using the established network connection, the information in the packet header received from the first electronic device. In this way, two adjacent electronic devices on the transmission path may route the packet carrying the first data to the second electronic device.

In some possible implementations, that the first electronic device transmits the first data to the second electronic device based on the path information and the mode of network connection between two adjacent electronic devices on the transmission path indicated by the path information includes:
The first electronic device sends, by using a second network connection, network connection indication information to the fifth electronic device adjacent to the first electronic device on the transmission path, where the network connection indication information is used to indicate the mode of network connection between two adjacent electronic devices other than the first electronic device and the fifth electronic device on the transmission path, so that the fifth electronic device determines a network connection mode to a next-hop node, the fifth electronic device is a next-hop node adjacent to the first electronic device on the transmission path, and the second network connection is a mode of connection between the first electronic device and the fifth electronic device on the transmission path indicated by the path information.

The first electronic device sends a second packet to the fifth electronic device by using the second network connection, where a packet header of the second packet includes the path information, and a packet body of the second packet includes the first data.

The packet header of the second packet further includes at least one of a source address, a destination address, a service identifier, and a service type, the source address is an address of the first electronic device, and the destination address is an address of the second electronic device.

In the foregoing solution, the first electronic device may indicate, to the fifth electronic device by using the network connection indication information, the network connection between the adjacent electronic devices on the transmission path determined based on the network topology relationship. The fifth electronic device may establish the network connection to the next-hop node in advance based on the network connection indication information. When data arrives, the established network connection is directly used to transmit data, which helps improve a transmission delay. In addition, the first electronic device may add the path information to a packet header of a packet of the first data, so that the fifth electronic device determines a next-hop node on the transmission path. In this way, two adjacent electronic devices on the transmission path may route the packet carrying the first data to the second electronic device.

In some possible implementations, the method further includes:
The first electronic device determines whether the established second network connection exists between the first electronic device and the fifth electronic device, where the second network connection is a network connection between the first electronic device and the fifth electronic device on the transmission path indicated by the path information.

If the second network connection does not exist, the first electronic device establishes the second network connection to the fifth electronic device; or
if the established second network connection exists, the first electronic device sends, by using the second network connection, the first packet to the fifth electronic device adjacent to the first electronic device on the transmission path, or the first electronic device sends, by using the second network connection, the network connection indication information to the fifth electronic device adjacent to the first electronic device on the transmission path.

In other words, in the foregoing solution, if there is the established second network connection between the first electronic device and the fifth electronic device, the first packet or the network connection indication information of the existing second network connection may be reused, thereby avoiding overheads caused by a need to re-establish a network connection.

In some possible implementations, after the first electronic device in the plurality of electronic devices determines, by using the network topology relationship, the information about the path for transmitting the first data to the second electronic device in the plurality of electronic devices and the mode of network connection between two adjacent electronic devices on the transmission path indicated by the path information, the method further includes:

The first electronic device obtains motion information of each electronic device.

The first electronic device does not update the network topology relationship if the first electronic device determines, based on the motion information of each electronic device, that an electronic device having an accelerated motion exists.

In the foregoing solution, the first electronic device may determine, based on the motion information, whether to update the network topology relationship, so as to avoid a case in which the first data fails to be transmitted due to information lags because the network topology relationship is not updated for a long time.

Optionally, motion information of each electronic device indicates a motion status of each electronic device, and each electronic device may determine a current geographical location and a motion status of the electronic device based on a sensor of the electronic device, for example, a speed, an acceleration, or a direction.

In some possible implementations, after the first electronic device in the plurality of electronic devices determines, based on the network topology relationship, the information about the path for transmitting the first data to the second electronic device in the plurality of electronic devices and the mode of network connection between two adjacent electronic devices on the transmission path indicated by the path information, the method further includes:
The first electronic device obtains basic information of at least one sixth electronic device different from the plurality of electronic devices; and the first electronic device determines a quantity of the at least one added sixth electronic device based on the basic information of the at least one sixth electronic device. The first electronic device updates the network topology relationship if the quantity of the at least one added sixth electronic device is greater than a preset quantity.

In the foregoing solution, the first electronic device may determine, based on the basic information of the at least one sixth electronic device, the quantity of added sixth electronic devices, and if the quantity of added sixth electronic devices meets the preset quantity, update the network topology relationship, so as to avoid a case in which the first data fails to be transmitted due to information lags because the network topology relationship is not updated for a long time.

In some possible implementations, the method further includes: If at least one sixth electronic device is added, an electronic device that is in the network topology relationship and that is directly connected to the at least one added sixth electronic device may send the historical network topology relationship to the at least one added sixth electronic device, so that the at least one added sixth electronic device determines the network topology relationship based on information about the at least one added sixth electronic device.

Optionally, the basic information of the at least one sixth electronic device is used to identify the at least one sixth electronic device, and the basic information of the at least one sixth electronic device includes at least one of an identifier of the electronic device, a name of the electronic device, a network identifier of the electronic device, a type of the electronic device, weight information of the electronic device, role information of the electronic device, and version information of the electronic device.

Optionally, the first electronic device may determine, by using other information of the at least one sixth electronic device, a quantity of the at least one added sixth electronic device, for example, network capability information of the at least one sixth electronic device.

In some possible implementations, after the first electronic device in the plurality of electronic devices determines, by using the network topology relationship, the information about the path for transmitting the first data to the second electronic device in the plurality of electronic devices and the mode of network connection between two adjacent electronic devices on the transmission path indicated by the path information, the method further includes:
The first electronic device obtains a quantity of offline electronic devices.

If the quantity of offline electronic devices meets a preset quantity, the first electronic device deletes basic information and network capability information of the offline electronic devices in the network topology relationship. For example, the preset quantity is one or more.

In some possible implementations, the first electronic device periodically sends a message, where the message carries a device identifier of the first electronic device; and if the first electronic device does not receive, within a preset time period, a response message sent by an electronic device, the first electronic device may determine that the electronic device is offline.

In the foregoing solution, the offline electronic device may be understood as an electronic device that is not detected or a reduced electronic device. If a quantity of offline electronic devices reaches a preset quantity (for example, the preset quantity is N, and N is a positive integer), the first electronic device updates the network topology relationship. The updating the network topology relationship is specifically deleting basic information and network capability information of the offline electronic device, so as to avoid a case in which the first data fails to be transmitted due to information lags because the network topology relationship is not updated for a long time.

In some possible implementations, after the first electronic device in the plurality of electronic devices determines, based on the network topology relationship, the information about the path for transmitting the first data to the second electronic device in the plurality of electronic devices and the mode of network connection between two adjacent electronic devices on the transmission path indicated by the path information, the method further includes:
The first electronic device obtains service set identifiers SSIDs sent by at least some of the plurality of electronic devices; the first electronic device determines, based on the SSIDs of the at least some electronic devices, whether scenarios of the plurality of electronic devices change; and if the scenarios of the plurality of electronic devices change, the first electronic device updates the network topology relationship.

In the foregoing solution, the first electronic device determines, based on an SSID, whether there is an electronic device whose scenario changes in the plurality of electronic devices, and if there is an electronic device whose scenario changes in the plurality of electronic devices, updates the network topology relationship, so as to avoid a case in which the first data fails to be transmitted due to information lags because the network topology relationship is not updated for a long time.

In some possible implementations, the first electronic device may determine, based on at least two of motion information of the plurality of electronic devices, a quantity of added sixth electronic devices, an offline electronic device, and an electronic device whose scenario is changed, whether to update the network topology relationship.

In some possible implementations, the first electronic device may periodically update the network topology relationship.

In some possible implementations, that the first electronic device updates the network topology relationship specifically includes: The first electronic device updates the network topology relationship based on the received updated basic information of each electronic device and the received updated network capability information of each electronic device.

In some possible implementations, before the first electronic device in the plurality of electronic devices determines, based on the network topology relationship, the information about the path for transmitting the first data to the second electronic device in the plurality of electronic devices and the mode of network connection between two adjacent electronic devices on the transmission path indicated by the path information, the method further includes:
The first electronic device obtains service information of the second electronic device, where the service information of the second electronic device is used to indicate a service supported by the second electronic device.

The first electronic device determines to send the first data corresponding to the service information to the second electronic device based on the service information of the second electronic device.

In the foregoing solution, before the first electronic device transmits the first data to the second electronic device, the first electronic device needs to determine which services are supported by the second electronic device. If the second electronic device supports the service corresponding to the first data, the first electronic device determines to send the first data to the second electronic device.

Optionally, the service information of the second electronic device is used to indicate a service supported by the second electronic device.

Optionally, the method further includes: The first electronic device directly or indirectly sends basic information of the first electronic device and network capability information of the first electronic device to another electronic device in the plurality of electronic devices.

Optionally, the method further includes: When the basic information of the first electronic device changes and/or the network capability information of the first electronic device changes, the first electronic device directly or indirectly sends the changed basic information of the first electronic device and the changed network capability information of the first electronic device to another electronic device in the plurality of electronic devices.

Optionally, the method further includes: The first electronic device directly or indirectly sends at least one of processing capability information, network quality, power information, motion information, a service set identifier, and service information of the first electronic device to another electronic device in the plurality of electronic devices.

Optionally, the method further includes: When at least one of processing capability information, network quality, power information, motion information, a service set identifier, or service information of the first electronic device changes, the first electronic device directly or indirectly sends changed information to another electronic device in the plurality of electronic devices.

According to a second aspect, a method for determining a network topology relationship is provided. The method includes: A first electronic device in a plurality of electronic devices obtains basic information of each electronic device in the plurality of electronic devices and network capability information of each electronic device.

The first electronic device determines the network topology relationship based on the basic information of each electronic device and the network capability information of each electronic device.

In some possible implementations, the basic information of each electronic device includes at least one of an identifier of the electronic device, a name of the electronic device, a network identifier of the electronic device, a type of the electronic device, weight information of the electronic device, role information of the electronic device, and version information of the electronic device.

In some possible implementations, the network capability information of each electronic device includes at least one of a network connection supported by the electronic device, a bandwidth supported by the network connection supported by the electronic device, connection information of the network connection supported by the electronic device, a connection status of the network connection supported by the electronic device, and connected-state network connection time information.

In some possible implementations, that a first electronic device obtains basic information of each electronic device in the plurality of electronic devices and network capability information of each electronic device includes:
The first electronic device establishes a first network connection to a third electronic device in the plurality of electronic devices.

The first electronic device receives, by using the first network connection, basic information of the third electronic device and network capability information of the third electronic device that are sent by the third electronic device, or receives, by using the first network connection, basic information of the third electronic device, network capability information of the third electronic device, basic information of a fourth electronic device in the plurality of electronic devices, and network capability information of the fourth electronic device that are sent by the third electronic device.

The first electronic device sends basic information of the first electronic device and network capability information of the first electronic device to the third electronic device by using the first network connection.

In some possible implementations, before the first electronic device establishes the first network connection to the third electronic device in the plurality of electronic devices, the method further includes:
The first electronic device periodically sends a message, where the message carries a device identifier of the first electronic device.

The first electronic device according to a response message sent by the third electronic device, where the response message carries a device identifier of the third electronic device.

The first electronic device determines, based on the device identifier of the third electronic device, that the third electronic device is online.

According to a third aspect, this application provides an apparatus. The apparatus is included in an electronic device, and the apparatus has a function of implementing behavior of the electronic device in the foregoing aspects and the possible implementations of the foregoing aspects. The function may be implemented by using hardware, or may be implemented by using hardware executing corresponding software. The hardware or the software includes one or more modules or units corresponding to the foregoing function. For example, a determining module or unit, or a transmission module or unit.

Optionally, the apparatus may be the foregoing first electronic device.

According to a fourth aspect, this application provides an electronic device, including one or more processors, a memory, a plurality of applications, and one or more computer programs. The one or more computer programs are stored in the memory. The one or more computer programs include instructions. When the instruction is executed by the electronic device, the electronic device is enabled to perform the data transmission method in any possible implementation of any one of the foregoing aspects.

Optionally, the electronic device may further include a touch display screen and/or a camera, where the touch display screen includes a touch-sensitive surface and a display.

Optionally, the electronic device may be the foregoing first electronic device.

According to a fifth aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the data transmission method according to any possible implementation of any one of the foregoing aspects.

According to a sixth aspect, this application provides a computer readable storage medium, including computer instructions. When the computer instructions are run on an electronic device, the electronic device is enabled to perform the data transmission method according to any possible implementation of any one of the foregoing aspects.

According to a seventh aspect, this application provides a computer program product. When the computer program product runs on an electronic device, the electronic device is enabled to perform the data transmission method according to any possible implementation of any one of the foregoing aspects.

### BRIEF DESCRIPTION OF DRAWINGS

FIG. 1 is a schematic block diagram of a structure of an electronic device according to an embodiment of this application;
FIG. 2 is a schematic diagram of a software architecture of an electronic device according to an embodiment of this application;
FIG. 3 is a schematic diagram of a method for determining a network topology relationship according to an embodiment of this application;
FIG. 4 is a schematic diagram of information exchange according to an embodiment of this application;
FIG. 5 is a schematic diagram of a network topology relationship according to an embodiment of this application;
FIG. 6 is a schematic diagram of a network topology relationship at a network layer according to an embodiment of this application;
FIG. 7 is a schematic diagram of a network topology relationship at a link layer according to an embodiment of this application;
FIG. 8 is a schematic diagram of a data transmission method according to an embodiment of this application;
FIG. 9 is a schematic diagram of another data transmission method according to an embodiment of this application;
FIG. 10 is a schematic diagram of a format of a packet of data according to an embodiment of this application;
FIG. 11 is a schematic diagram of a format of another packet of data according to an embodiment of this application;
FIG. 12 is a schematic diagram of still another data transmission method according to an embodiment of this application;
FIG. 13 is a schematic diagram of a format of still another packet of data according to an embodiment of this application;
FIG. 14 is a schematic diagram of a format of still another packet of data according to an embodiment of this application;
FIG. 15 is a schematic diagram of updating a network topology relationship according to an embodiment of this application; and
FIG. 16 is a schematic diagram of interaction between a mobile phone and a watch according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

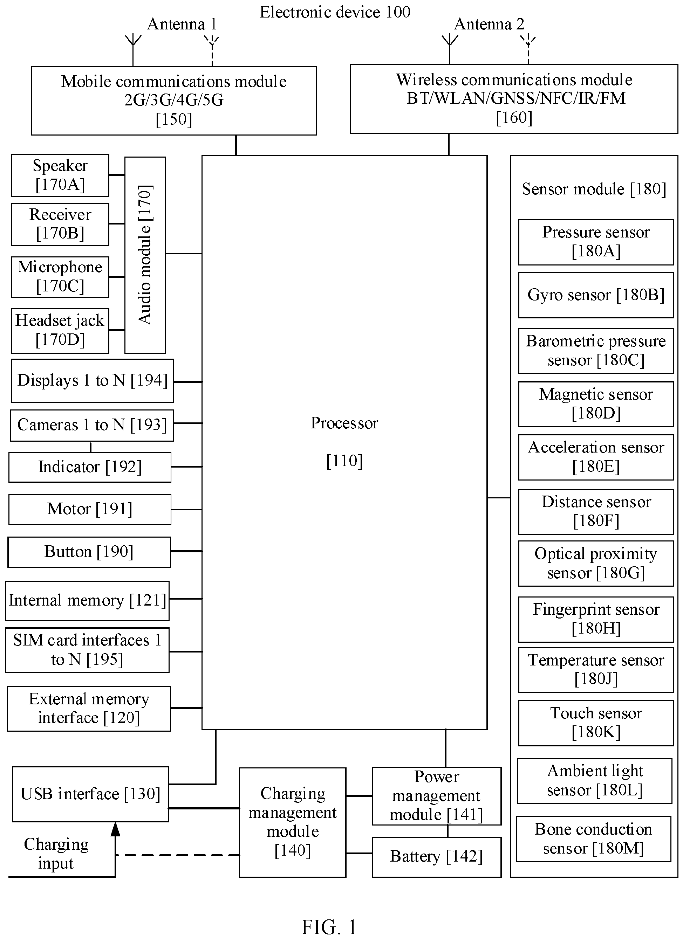

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be used for audio communication, and analog signal sampling, quantization, and coding. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a bidirectional communications bus. It converts to-be-transmitted data between serial communication and parallel communication. In some embodiments, the UART interface is usually used to connect the processor 110 to the wireless communications module 160. For example, the processor 110 communicates with a Bluetooth module in the wireless communications module 160 through the UART interface to implement a Bluetooth function. In some embodiments, the audio module 170 may transmit an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPIinterface includes a camera serial interface (camera serial interface, CSI), a display serial interface (display serial interface, DSI), and the like. In some embodiments, the processor 110 communicates with the camera 193 through the CSI interface to implement a photographing function of the electronic device 100. The processor 110 communicates with the display 194 through the DSI interface to implement a display function of the electronic device 100.

The GPIO interface may be configured by software. The GPIO interface may be configured as a control signal or as a data signal. In some embodiments, the GPIO interface may be configured to connect the processor 110 to the camera 193, the display 194, the wireless communications module 160, the audio module 170, the sensor module 180, or the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type C interface, or the like. The USB interface 130 may be configured to connect to a charger to charge the electronic device 100, or may be configured to transmit data between the electronic device 100 and a peripheral device, or may be configured to connect to a headset, to play audio by using the headset. The interface may also be configured to connect to another electronic device such as an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device 100 through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communications module 160, and the like. The power management module 141 may be configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution that is applied to the electronic device 100 and that includes 2G/3G/4G/5G. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and provided in a same device as the mobile communications module 150 or another function module.

The wireless communications module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 in the electronic device 100 are coupled, and the antenna 2 and the wireless communications module 160 in the electronic device 100 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-code division multiple access (time-division code division multiple access, TD-SCDMA), long term evolution (long term evolution, LTE), a fifth-generation wireless communications system (5G, the 5th Generation of wireless communications system), BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The light-sensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. The NPU may implement applications such as intelligent cognition of the electronic device 100, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 by using the external memory interface 120, to implement a data storage function. For example, files such as music and videos are stored in the external storage card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 100. In addition, the internal memory 121 may include a high-speed random access memory, and may further include a non-volatile memory, for example, at least one magnetic disk storage device, a flash memory, and a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound by moving a human mouth close to the microphone 170C, to input the sound signal to the microphone 170C. At least one microphone 170C may be disposed in the electronic device 100. In some other embodiments, two microphones 170C may be disposed in the electronic device 100, to implement a noise reduction function, in addition to collecting the sound signal. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (Cellular Telecommunications Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touched position based on a detected signal of the pressure sensor 180A. In some embodiments, touch operations performed on a same touch position but with different touch operation intensity may correspond to different operation instructions. For example, when a touch operation with a touch operation intensity less than a first pressure threshold is performed on a short message application icon, an instruction of viewing short messages is executed. When a touch operation with a touch operation intensity greater than or equal to the first pressure threshold is performed on the short message application icon, an instruction of creating a new short message is executed.

The gyro sensor 180B may be configured to determine a motion posture of the electronic device 100. In some embodiments, angular velocities of electronic device 100 around three axes (which are x, y, and z axes) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude by using a barometric pressure value measured by the barometric pressure sensor 180C to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip device, the electronic device 100 may detect opening and closing of the flip by using the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between landscape mode and portrait mode or a pedometer.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 in a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may be disposed in a headset, to be integrated into a bone conduction headset. The audio module 170 may parse out a voice signal based on the vibration signal of the sound vibration bone obtained by the bone conduction sensor 180M, to implement a voice function. The application processor may parse out heart rate information based on the blood pressure beating signal obtained by the bone conduction sensor 180M, to implement a heart rate detection function.

The button 190 includes a power button, a volume button, and the like. The button 190 may be a mechanical button, or may be a touch-sensitive button. The electronic device 100 may receive a button input, and generate a button signal input related to user setting and function control of the electronic device 100.

The motor 191 may generate a vibration prompt. The motor 191 may be used for vibration alerts for incoming calls, and may also be used for touch vibration feedback. For example, touch operations on different applications (such as photographing and audio playing) may correspond to different vibration feedback effects. For touch operations performed on different areas of the display 194, the motor 191 may also correspond to different vibration feedback effects. Different application scenarios (such as a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. Types of the plurality of cards may be the same as or different. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

It should be noted that any electronic device mentioned in embodiments of this application may include more or fewer modules in the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

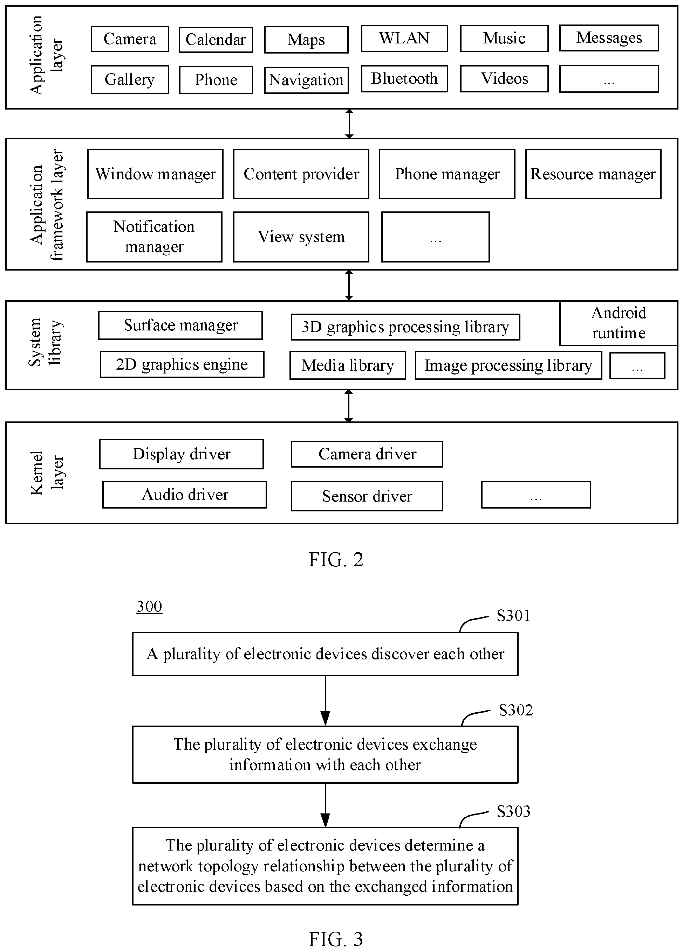

FIG. 2 is a block diagram of a software structure of the electronic device 100 according to this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a short message notification icon may include a view for displaying text and a view for displaying pictures.

The phone manager is configured to provide a communications function for the electronic device 100, for example, management of a call status (including answering, declining, or the like).

The resource manager provides resources for applications, such as localized strings, icons, images, layout files, and video files.

The notification manager enables an application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: One part is a function that needs to be invoked by a Java language, and the other part is a kernel library of Android.

The application layer and the application framework layer run on a virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Libraries), a 3D graphics processing library (for example, an OpenGL ES), and a 2D graphics engine (for example, an SGL).

The surface manager is configured to manage a display subsystem and provide fusion of 2D and 3D layers for a plurality of applications.

The media library supports a plurality of common audio and video formats for playback and recording, as well as static image files. The media library may support a plurality of audio and video encoding formats, for example, MPEG-4, H.264, MP3, AAC, AMR, JPG, and PNG.

The 3D graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

When communication needs to be performed between the electronic device and the electronic device, a network connection mode in which the two electronic devices can communicate needs to be first discovered, so as to select a network connection from these network connections, and then establish a connection. For example, two electronic devices may communicate with each other by using a network connection such as Bluetooth, WiFi, or USB. The two electronic devices need to first discover that communication may be performed in three network connection modes: Bluetooth, WiFi, or USB, then select one network connection mode from the three network connection modes to establish a connection, and transmit data by using the established connection. In this process, the connection needs to be discovered first, then the connection is selected, and the connection is further established, so that a transmission delay is relatively long.

In this embodiment of this application, according to the data transmission method provided in this embodiment of this application, different network connections supported by the electronic devices may be networked in advance, to form a network topology relationship. In this way, when any two electronic devices in the network topology relationship communicate with each other, the two electronic devices may communicate with each other based on the network topology relationship. The network topology relationship may include a network connection between any two of a plurality of electronic devices. In this way, when transmitting data, the two electronic devices directly transmit data based on the network connection in the network topology relationship. This avoids a delay caused when two electronic devices need to first discover one or more modes of network connection between the two electronic devices and then select a proper network connection from the one or more network connection modes for establishment, and helps reduce a data transmission delay. In addition, the electronic device may systematically plan a network topology relationship between different electronic devices, so that a network resource can be fully utilized, and resource preemption between electronic devices can be avoided.

The following describes how to determine a network topology relationship with reference to FIG. 3.

S301. A plurality of electronic devices discover each other

In S301, the plurality of electronic devices discover each other in either of the following two manners.

Manner 1: Any one of the plurality of electronic devices may periodically send a broadcast message, and an electronic device that receives the broadcast message replies with a response message to the electronic device that sends the broadcast message. In this way, it may be considered that the two electronic devices discover each other, and a format of the response message may be consistent with or inconsistent with a format of the broadcast message. If there are a plurality of electronic devices that receive the broadcast message, and the plurality of electronic devices each reply with a response message to the electronic device that sends the broadcast message, the plurality of electronic devices may be discovered by using one broadcast message.

Optionally, the broadcast message sent by any electronic device may carry at least one of a device identification address, a user account, a device type, various types of keep-alive flag bits, and a reply flag of the electronic device. As shown in Table 1, the electronic device that receives the broadcast message may perform filtering based on the information sent by the electronic device that sends the broadcast message. For example, the electronic device that receives the broadcast message determines the discovered electronic device based on the device identification address and/or the device type carried in the broadcast message. For another example, the electronic device that receives the broadcast message determines, based on the user account of the electronic device that sends the broadcast message, whether the electronic device that sends the broadcast message is a trusted device. The electronic device that receives the broadcast message compares the user account of the electronic device that sends the broadcast message with a user account of the electronic device that receives the broadcast message. If the user account of the electronic device that sends the broadcast message is the same as the user account of the electronic device that receives the broadcast message, the electronic device that receives the broadcast message may determine that the electronic device that sends the broadcast message is a trusted device, and replies with a response message to the electronic device that sends the broadcast message. Optionally, the response message replied by the electronic device may include at least one of a device identification address, a user account, a device type, various types of keep-alive flag bits, and a reply flag of the electronic device. Different values of the reply flag indicate whether the message is a broadcast message or a response message. For example, if the reply flag is 0, it indicates that the message is a broadcast message. If the reply flag is 1, it indicates that the message is a response message of a broadcast message. In this way, the electronic device that sends the broadcast message may identify, based on the response message, devices that receive the broadcast message, that is, the electronic device discovers the devices. The electronic device that sends the broadcast message may perform filtering based on the information carried in the response message.

**Table 1**

| Business extension | UID hash | DeviceType | deviceId | Flag bit |
|---|---|---|---|---|
| Various types of flag bits | User account | Device type | Device identification address | Reply flag bit |

In addition, if any one of the plurality of electronic devices sends a broadcast message, and an electronic device that does not receive the broadcast message does not reply to the electronic device that sends the broadcast message with a response message, the two electronic devices do not discover each other

Manner 2: Any one of the plurality of electronic devices may send a directional message to a destination electronic device. If another electronic device receives the directional message, the another electronic device replies with a response message to the electronic device that sends the directional message. In this way, it may be considered that the two electronic devices discover each other For example, the directional message may be a Bluetooth broadcast message. The directional message includes a Bluetooth address of the destination electronic device. For example, the directional message sent by the any one of the plurality of electronic devices is a Bluetooth broadcast message, and the Bluetooth broadcast message includes the Bluetooth address of the destination electronic device. An electronic device that receives the Bluetooth broadcast message may reply with a response message to the electronic device that sends the broadcast message, where the response message includes a device identifier. In this way, the electronic device that sends the broadcast message may determine that the destination electronic device receives the Bluetooth broadcast message, and the two electronic devices may discover each other.

In addition, if any one of the plurality of electronic devices sends a directional message, and an electronic device that does not receive the directional message does not reply to the electronic device that sends the directional message with a response message, the two electronic devices do not discover each other

It should be noted that the plurality of electronic devices may discover each other in sequence, or may discover each other at the same time. A sequence in which the plurality of electronic devices discover each other is not limited in this embodiment of this application. In addition, there may be another manner in which the plurality of electronic devices discover each other. This is not limited in this embodiment of this application.

It should also be noted that the plurality of electronic devices may discover each other by sending a message and/or receiving a message by using the mobile communications module 150 and/or the wireless communications module 160 shown in FIG. 1 of each of the plurality of electronic devices. For example, in Manner 1, the electronic device that sends the broadcast message may send the broadcast message and receive the response message by using the mobile communications module 150 and/or the wireless communications module 160 of the electronic device that sends the broadcast message, and the electronic device that receives the broadcast message may receive the broadcast message and send the response message by using the mobile communications module 150 and/or the wireless communications module 160 of the electronic device that receives the broadcast message. For another example, in Manner 2, the electronic device that sends the directional message sends the directional message and receives the response message by using the mobile communications module 150 and/or the wireless communications module 160 of the electronic device that sends the directional message, and the electronic device that receives the directional message receives the directional message and sends the response message by using the mobile communications module 150 and/or the wireless communications module 160 of the electronic device that receives the directional message.

S302. The plurality of electronic devices exchange information with each other. The information exchanged between the plurality of electronic devices may include at least one of basic information of the electronic device and network capability information of the electronic device.

The plurality of electronic devices may exchange not only information about the plurality of electronic devices, but also obtained information about another electronic device.

Optionally, after exchanging the information, the plurality of electronic devices may store the exchanged information.

Specifically, S302 may include: After discovering each other, the plurality of electronic devices may establish any network connection to each other, and exchange the information by using the established network connection. For example, if an electronic device 1 and an electronic device 2 discover each other, the electronic device 1 and the electronic device 2 may first establish a network connection in any network connection mode. For example, if both the electronic device 1 and the electronic device 2 support Bluetooth and WiFi transmission, the electronic device 1 and the electronic device 2 may establish a network connection by using Bluetooth or WiFi, and then exchange information by using the established network connection.

Optionally, after exchanging the information by using the established network connection, the plurality of electronic devices may disconnect the established network connection.

It may be understood that the established network connection may be understood as a physical connection.

The basic information of the electronic device may include at least one of the following: an identifier (device ID) of the electronic device, a name (device name) of the electronic device, a type (device type) of the electronic device, a network identifier (Network ID), weight information of the electronic device, role information of the electronic device, and version information of the electronic device. The identifier of the electronic device is used to uniquely identify the electronic device. The name of the electronic device is a name of the electronic device that is defined by a user or that is defined before delivery of the electronic device. The type of the electronic device indicates a type to which the electronic device belongs. For example, the type is a mobile phone, a PC, a wearable device, a headset, glasses, a sound box, a head unit, or Vision. The network identifier is a unique networking identifier allocated by a network to the electronic device after the electronic device accesses the network, for example, may be a unique device identifier (unique device identifier, UDID). The version information of the electronic device indicates a version number of a current system of the electronic device.

Both the identifier of the electronic device and the network identifier may uniquely identify the electronic device. Therefore, the basic information exchanged by the electronic device may include the identifier of the electronic device or the network identifier of the electronic device, or certainly may include the identifier of the electronic device and the network identifier of the electronic device. This is not limited in this application. In addition, the identifier of the electronic device and the network identifier may be a combination of 16 letters and digits. For example, both the identifier of the electronic device and the network identifier may be 4b3d-4534-6b35-f246. Alternatively, the identifier of the electronic device and the network identifier may be a combination of a 32-bit universally unique identifier (universally unique identifier, UUID). For example, the identifier of the electronic device may be "A03F94A675FD65C222A22519B628619EC9CAD21D1BEAFEDDF40A7140D8B650FF", and the network identifier may be "ED45800FF32CA2CE1A5CF812758FA19A213CA0DB2B5D62DE326A604F6685812C".

The weight information of the electronic device may be determined by the electronic device based on the network capability information of the electronic device and processing capability information of the electronic device. For example, different electronic devices have different power consumption, chip processing capabilities, and memories. An electronic device with high power consumption, a good chip processing capability, a large memory, and a strong network capability has a high weight. On the contrary, an electronic device with low power consumption, a poor chip processing capability, a small memory, and a weak network capability has a low weight.

The role information of the electronic device indicates a central node, an ordinary node, or a tail node of the electronic device, and the role of the electronic device indicates a role that the electronic device can play in a network topology relationship. For example, the role may be a central node, an ordinary node, or a tail node in a network topology relationship. The role of the electronic device may be determined by the electronic device based on a weight, or determined based on network capability information of an electronic device whose weight is determined and processing capability information of the electronic device. For example, if a higher weight of the electronic device indicates that the electronic device is more likely to be a central node, and a lower weight of the electronic device indicates that the electronic device is more likely to be a tail node. For example, a mobile phone and a computer may be central nodes, a watch and a band may be tail nodes, and a sound box and a television may be intermediate nodes.

Before exchanging information, the electronic device may first determine that the electronic device is a central node. After exchanging information with each other, the electronic device may update role information of the electronic device based on the exchanged information. For example, an electronic device may determine that the electronic device is a central node for the first time. When receiving processing capability information of another electronic device, the electronic device may determine, based on the processing capability information of the another electronic device, that a processing capability of the another electronic device is stronger than a processing capability of the electronic device. Therefore, the electronic device may update the electronic device to an ordinary node. In this way, each electronic device may update role information.

The network capability information includes at least one of a network connection (NetworkCapabilities) supported by the electronic device, a maximum bandwidth supported by the network connection supported by the electronic device, connection information (such as a port number, a MAC address, and an IP address) of the network connection supported by the electronic device.

For example, the network connection supported by the electronic device may include at least one of WiFi, Bluetooth, near field communication (near field communication, NFC), a USB, and a cellular network (for example, 4G or 5G). WiFi may include WiFi Direct (WiFi-P2P) and a WiFi local area network (WiFi-LAN).

For example, network capability information of an electronic device includes the following content:

```
          DeviceInfoList
          {
              NetworkCapabilities //Network connection supported by the electronic device
              {ble, WiFi-P2P, WiFi-LAN}//Bluetooth
Low Energy, WiFi Direct, local area network WiFi
          MaxBandWidth{ble:lM; WiFi-LAN:100M; WiFi-P2P:200M}//Maximum bandwidth supported by the
network connection
              ConnectionInfo //Connection information
of the network connection supported by the electronic
 device
              {ble:
          { mac address:xx-16-xx-xx-xx-xx
          ip address: 192.168.x.x;
          port: 5666}
          //MAC address, IP address, and port number of ble
          }
          {WiFi-P2P:
          { mac address:xx-15-xx-xx-xx-xx
          ip address: 192.167.x.x;
          port: 5665}
          //MAC address, IP address, and port number of WiFi-P2P
          }
          { WiFi-LAN:
          { mac address:xx-17-xx-xx-xx-xx
          ip address: 192.163.x.x;
          port: 5658}
          //MAC address, IP address, and port number of the WiFi-LAN
          }
          }
```

It should be noted that the network capability information exchanged by the electronic device, for example, the network connection including ble, WiFi-P2P, or WiFi-LAN supported by the electronic device in the foregoing example, means that the electronic device supports communication by using ble, WiFi-P2P, or WiFi-LAN. Both the Bluetooth function and the WiFi function of the electronic device may be in an enabled state, or the Bluetooth function and the WiFi function of the electronic device are not in an enabled state. However, when the ble, WiFi-P2P, and WiFi-LAN functions need to be used, the electronic device may enable the Bluetooth function and the WiFi function of the electronic device.

It should be noted that an electronic device may first send basic information and network capability information of the electronic device to another electronic device, or may receive basic information and network capability information that are sent by another electronic device. When receiving basic information and network capability information of still another electronic device, the electronic device may also send the received basic information and network capability information of the still another electronic device to the another electronic device. In other words, in a process of exchanging information, the electronic device may first send information about the electronic device, and then send detected information about another electronic device. Alternatively, one electronic device may simultaneously send basic information of the electronic device, network capability information of the electronic device, basic information of another electronic device, and network capability information of the another electronic device to still another electronic device.

Optionally, in addition to the basic information of the electronic device and the network capability information of the electronic device, the information exchanged between the plurality of electronic devices may further include at least one of processing capability information of the electronic device, network quality of the electronic device, power information of the electronic device, motion information of the electronic device, service information of the electronic device, a service set identifier (service set identifier, SSID) of the electronic device, and topology information.

The processing capability information of the electronic device indicates a processing capability of the electronic device, for example, including power consumption, a chip processing capability, and a memory of the electronic device.

The network quality of the electronic device indicates network quality of an environment in which the electronic device is currently located. The network quality of the electronic device varies in different environments. For example, the network quality of the electronic device varies in a tunnel and an open area. The network quality includes a connection rate, signal strength, and the like.

The power information of the electronic device indicates current remaining power of the electronic device, power availability duration of the electronic device, or the like.

The motion information of the electronic device indicates a motion status of the electronic device. Each electronic device may determine a current geographical location and a motion status of the electronic device based on a sensor of the electronic device, for example, a speed, an acceleration, or a direction.

The service information of the electronic device indicates a service supported by the electronic device, for example, a projection service and/or a voice call service.

The service set identifier (service set identifier, SSID) of the electronic device is used to identify different networks connected to the electronic device.

The topology information of the electronic device is used to indicate a network topology relationship stored in the electronic device. The topology information may be a connection relationship between historically determined network topology relationships. When a new electronic device joins the network topology relationship, the electronic device in the network topology relationship may send the network topology relationship stored in the electronic device to the new electronic device. In this way, the new electronic device may determine the new network topology relationship based on the network topology relationship sent by the another electronic device and information about the new electronic device. The new electronic device may exchange the information about the new electronic device with the another electronic device, and the another electronic device updates the network topology relationship based on the information about the new electronic device.

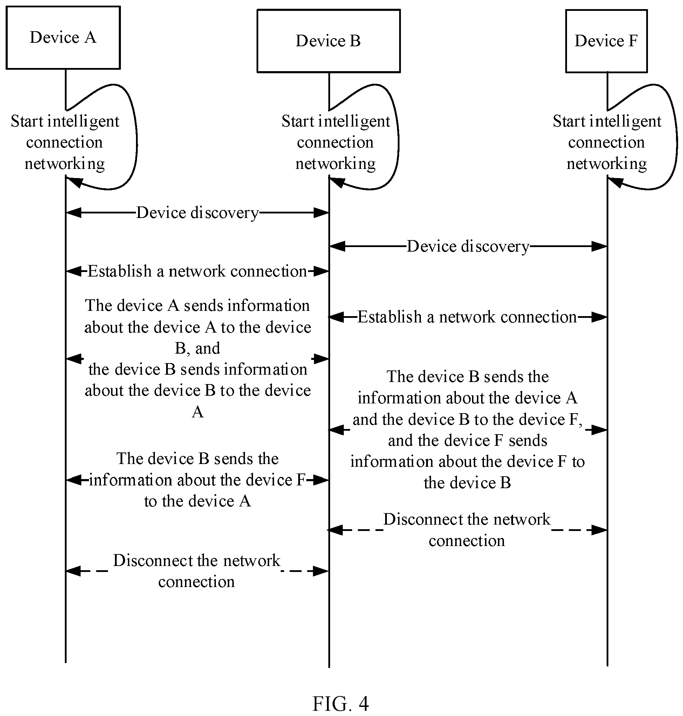

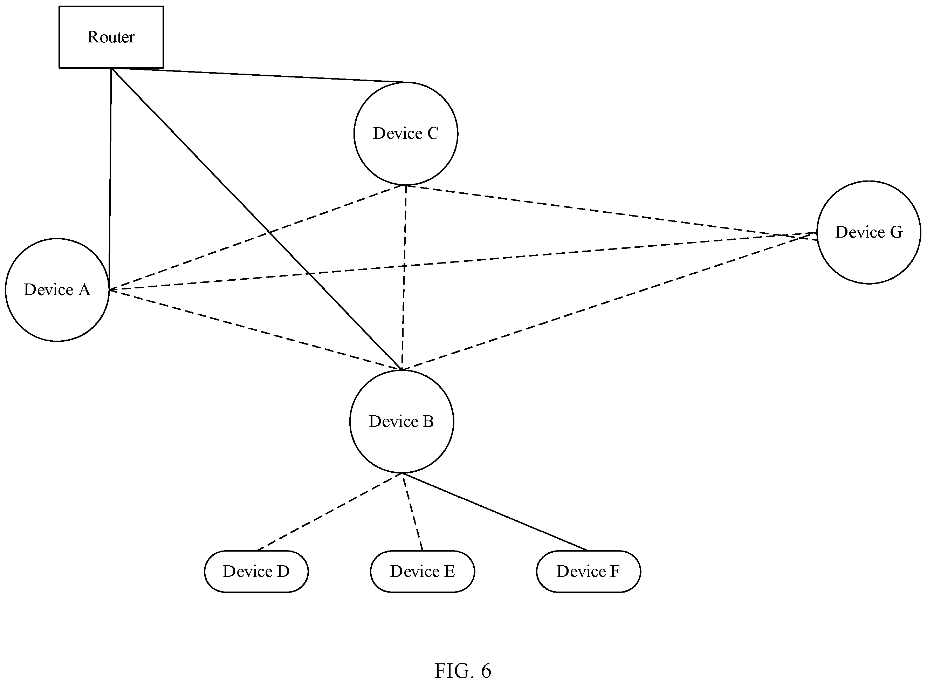

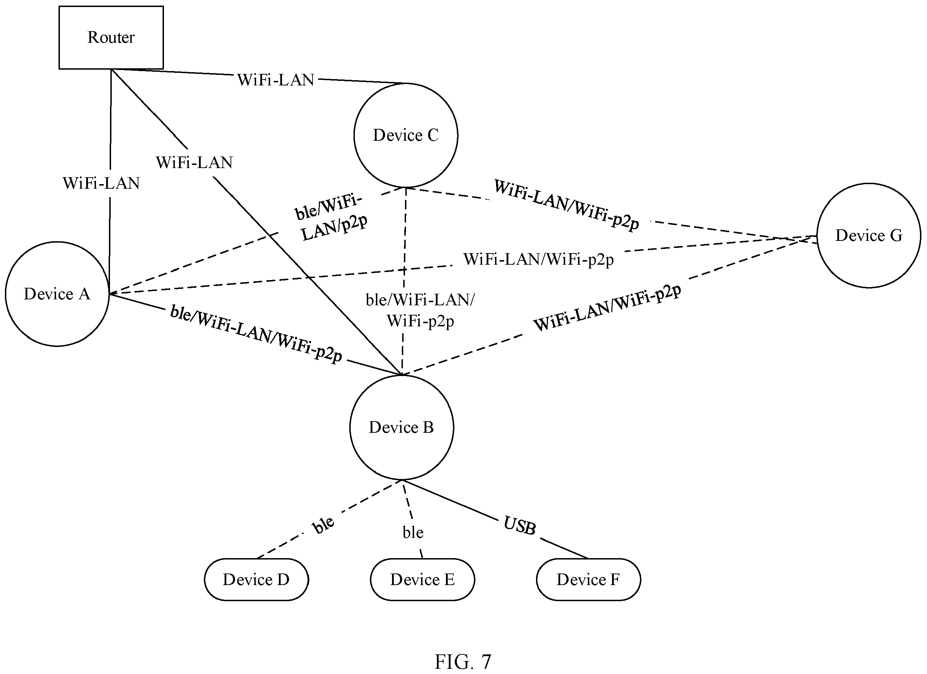

For example, as shown in FIG. 4, a device A, a device B, and a device F may start intelligent connection networking by using a user switch, a voice, a gesture, or the like. For example, the device A first detects that the device B is online. After the device A and the device B discover each other, the device A and the device B establish any network connection, and exchange information by using the established network connection. Specifically, the exchanging information includes: The device A sends information about the device A to the device B, and the device B sends information about the device B to the device A. If the device B and the device F discover each other, the device B and the device F establish a network connection, and exchange information by using the established network connection. Specifically, the exchanging information includes: The device F sends information about the device F to the device B, and the device B sends the information about the device B and the information about the device A to the device F. In this way, the device F may obtain the information about the device A and the device B, and the device F may also learn that the device A is also online. In addition, the device B sends the obtained information about the device F to the device A. In this way, the device A may also learn that the device F is online. In this way, information exchange may be completed between the three devices: the device A, the device B, and the device F. After completing information exchange between the device A, the device B, and the device F, the device A, the device B, and the device F store the exchanged information. The device A, the device B, and the device F in FIG. 4 may be devices in FIG. 6 and FIG. 7.

In addition, in the example shown in FIG. 4, the device A and the device B may disconnect the network connection after completing information exchange, and the device B and the device F may disconnect the network connection after completing information exchange.

It should be noted that, after exchanging information, two electronic devices mat disconnect a network connection used for exchanging information. When an electronic device detects a new electronic device, a new network connection may be established, and information is exchanged by using the new network connection. Alternatively, after exchanging information of all electronic devices that can be detected, the two electronic devices disconnect the network connection. In other words, in this embodiment of this application, the two electronic devices may exchange information about different electronic devices by using one established network connection, or may exchange information about different electronic devices by using a plurality of established network connections. As shown in FIG. 4, after exchanging information, the device A and the device B may disconnect the established network connection. After obtaining the information about the device F, the device B may establish a new network connection, and send the information about the device B to the device A by using the new network connection. Alternatively, the network connection established between the device A and the device B is not disconnected first, and is disconnected after the device B and the device A exchange information about the device F. This is not limited in this embodiment of this application.

It should be noted that any two electronic devices in the plurality of electronic devices may establish a network connection and exchange information after discovering each other. In other words, electronic devices that first discover each other in the plurality of electronic devices may exchange information, and there is no sequence limitation on whether other electronic devices discover each other In other words, S301 and S302 are for ease of description. Actually, some electronic devices in S301 may discover each other after, before, or at the same time when some electronic devices in S302 exchange information. This is not limited in this embodiment of this application.

It should also be noted that a plurality of electronic devices may exchange information with each other by using their respective mobile communications module 150 and/or wireless communications module 160 shown in FIG. 1.

Optionally, a condition for performing S302 or S301 is that the plurality of electronic devices are trusted devices. The plurality of electronic devices may determine, based on exchange trust information, that the electronic devices are trusted devices. For example, a same account is used to log in to the plurality of electronic devices, that is, account IDs are the same. Alternatively, a user performs binding and authentication processes on the plurality of electronic devices, for example, performs binding by using a PIN code or a QR code.

S303. The plurality of electronic devices determine a network topology relationship between the plurality of electronic devices based on the exchanged information.

Further, the plurality of electronic devices determine the network topology relationship between the plurality of electronic devices based on the exchanged basic information of the electronic devices and the exchanged network capability information of the electronic devices. The network topology relationship may include a mode of network connection between the plurality of electronic devices.

Specifically, the plurality of electronic devices may determine the network topology relationship based on the exchanged network capability information of each electronic device and the exchanged basic information of each electronic device. Specifically, one of the plurality of electronic devices (for example, an electronic device used as a central node) may determine the network topology relationship, and then synchronize the network topology relationship with another electronic device, or each electronic device determines the network topology relationship based on the exchanged information. A form in which the electronic device stores the network topology relationship is not limited. For example, after information is exchanged between the device A, the device B, a device C, a device D, a device E, the device F, and a device G in FIG. 7, the exchanged information may be stored, and the network topology relationship may be determined based on the exchanged information. For example, the device A may store the following content, where information (info) about each device may include at least a portion of the foregoing information. An example is as follows:

```
          List{
          DeviceA Device
          {NetworkId: 4b3d-4534-6b35-f246//Uniquely identify a network device
          DeviceId:4b3d-4534-6b35-f246//Identifier of the device A
          DeviceName: kk's phone//Mobile phone whose name is kk of the device A
          Device Type: 00E//The type of device A is mobile phone
          Weight: 100 //Weight of the current device,
which is calculated based on the network capability and type
 of a node
          Role: central node//Device role
          Power: 255//Remaining power
          SwVersion: v1.0//System version number
          }
             DeviceB info
                         {NetworkId: 4b3d-4535-6b35-f246//Uniquely identify a network device
          DeviceId: 4b3d-4534-6b35-f246//Device identifier
          DeviceName: kk's PAD//Tablet whose device name is kk
          Device Type: 011//The type of device B is tablet
          Weight: 85 //Weight of the current device,
which is calculated based on the network capability and type of
 a node
          Role: ordinary node //Device role
          Power: 256//Remaining power
          SwVersion: v1.0//System version number
          }
             DeviceC info
                       {NetworkId: 4b3d-4535-6b37-f246//Uniquely identify a network device
          DeviceId: 4b3d-4535-6b37-f246//Device identifier
          DeviceName: gg's PC//PC whose device name is gg
          Device Type: 00B//The device type is computer
          Weight: 80 //Weight of the current device, which
is calculated based on the network capability and type of
 a node
          Role: ordinary node //Device role
          Power: 180//Remaining power
          SwVersion: v2.0//System version number
          }
             DeviceD info
                  {NetworkId: 4d3b-4535-6c37-f243//Uniquely identify a network device
          DeviceId: 4d3b-4535-6c37-f243//Device identifier
          DeviceName: kk's watch//Watch whose device name is kk
          DeviceType: 06D//The device type is watch
          Weight: 40 //Weight of the current device, which
is calculated based on the network capability and type of
 a node
          Role: tail node //Device role
          Power: 160//Remaining power
          SwVersion: v1.1//System version number
          }
             DeviceE info
          {NetworkId: 4d3b-4535-6c37-f243//Uniquely identify a network device
          DeviceId: 4d3b-4535-6c37-f243//Device identifier
          DeviceName: kk's glasses glasses//Glasses whose device name is kk
          Device Type: 084//The device type is glasses
          Weight: 35 //Weight of the current device, which
is calculated based on the network capability and type of
 a node
          Role: tail node //Device role
          Power: 160//Remaining power
          SwVersion: v2.1//System version number
          }
             DeviceF info
          {NetworkId: 4e3b-4535-6c37-f256//Uniquely identify a network device
          DeviceId: 4e3b-4535-6c37-f256//Device identifier
          DeviceName: ffs loudspeaker//Sound box whose device name is ff
          Device Type: 00A//The device type is sound box
          Weight: 38 //Weight of the current device, which
is calculated based on the network capability and type of
 a node
          Role: tail node //Device role
          Power: 230//Remaining power
          SwVersion: vl. 1//System version number
          }
             DeviceG info
          {NetworkId: 43eb-4635-6d37-f526//Uniquely identify a network device
          DeviceId: 43eb-4635-6d37-f526//Device identifier
          DeviceName: dd's phone//Mobile phone whose device name is dd
          DeviceType: 00E//The device type is mobile phone
          Weight: 36 //Weight of the current device, which is
calculated based on the network capability and type of
 a node
          Role: tail node //Device role
          Power: 160//Remaining power
          SwVersion: v1.0//System version number
          }
 
          }
          ConnectAbility Table
          {
 
                  {
                     Source :DevId-A
          Target: DevId-B
          {
          Route: ble//A Bluetooth connection is supported
          MaxBandWidth: 1M//Maximum bandwidth supported by a Bluetooth connection
          }
          {
          Route: WiFi-LAN//A WiFi-LAN connection is supported
          MaxBandWidth: 100M//Maximum bandwidth supported by a WiFi-LAN connection
          }
          {
          Route: WiFi-P2P//A WiFi-P2P connection is supported
          MaxBandWidth: 200M//Maximum bandwidth supported by a WiFi-P2P connection
          }
                  }
                  {
                     Source :DevId-A
          Target: DevId-C
          {
          Route: ble//A ble connection is supported
          Bandwidth: 1M//Maximum bandwidth supported by a ble connection
          }
          {
          Route: WiFi-LAN//A WiFi-LAN connection is supported
          MaxBandWidth: 100M//Maximum bandwidth supported by a WiFi-LAN connection
          }
          {
          Route: WiFi-P2P//A WiFi-P2P connection is supported
          MaxBandWidth: 200M//Maximum bandwidth supported by a WiFi-P2P connection
          }
                  }
          {
          Source:DevId-A
          Target: DevId-G {
          Route: WiFi-LAN//A WiFi-LAN connection is supported
          MaxBandWidth: 100M//Maximum bandwidth supported by a WiFi-LAN connection
          }
          {
          Route: WiFi-P2P//A WiFi-P2P connection is supported
          MaxBandWidth: 200M//Maximum bandwidth supported by a WiFi-P2P connection
          }
          }
          {
          Source :DevId-B
          Target: DevId-C
          {
          Route: ble//A ble connection is supported
          Bandwidth: 1M//Maximum bandwidth supported by a ble connection
          }
          {
          Route: WiFi-LAN//A WiFi-LAN connection is supported
          MaxBandWidth: 100M//Maximum bandwidth supported by a WiFi-LAN connection
          }
          {
          Route: WiFi-P2P//A WiFi-P2P connection is supported
          MaxBandWidth: 200M//Maximum bandwidth supported by a WiFi-P2P connection
          }
                  }
          {
          Source :DevId-B
          Target: DevId-D {
          Route: ble//A ble connection is supported
          Bandwidth: 1M//Maximum bandwidth supported by a ble connection
          }
          }
          {
          Source :DevId-B
          Target: DevId-E
          {
          Route: ble//A ble connection is supported
          Bandwidth: 1M//Maximum bandwidth supported by a ble connection
          }
          }
          {
          Source :DevId-B
          Target: DevId-F
          {
          Route: USB//A USB connection is supported
          Bandwidth: 50M//Maximum bandwidth supported by a USB connection
          }
          }
          {
          Source :DevId-B
          Target: DevId-G
          {
          Route: WiFi-LAN//A WiFi-LAN connection is supported
          MaxBandWidth: 100M//Maximum bandwidth supported by a WiFi-LAN connection
          }
          {
          Route: WiFi-P2P//A WiFi-P2P connection is supported
          MaxBandWidth: 200M//Maximum bandwidth supported by a WiFi-P2P connection
          }
          }
          {
                     Source :DevId-C
          Target: DevId-G
          Route: WiFi-LAN//A WiFi-LAN connection is supported
          MaxBandWidth: 100M//Maximum bandwidth supported by a WiFi-LAN connection
          }
          {
          Route: WiFi-P2P//A WiFi-P2P connection is supported
          MaxBandWidth: 200M//Maximum bandwidth supported by a WiFi-P2P connection
          }
                  }
          }
          TotalConnectNum: n//Total number of connections
          }
```

It should be noted that a mode of network connection between two electronic devices in the ConnectAbility Table indicates that communication between the two electronic devices is reachable by using the network connection mode. For example, if the connection capability between Devld-A and DevId-B includes Bluetooth, WiFi-p2p, and WiFi-LAN, it indicates that DevId-A and DevId-B may communicate with each other by using Bluetooth, WiFi-p2p, or WiFi-LAN.

For example, content stored in the electronic device may alternatively be in a form shown in Table 2. A plurality of electronic devices may be a mobile phone, a PAD, a PC, a large screen, a sound box, a headset, a mobile phone, a band, and glasses. A networking relationship between these devices is shown in Table 2. After these electronic devices discover each other, names of the another electronic device and identifiers of the another electronic device may be determined based on exchanged basic information of the another electronic device. For example, the mobile phone may determine that names of the electronic devices are respectively PAD, PC, large screen, sound box, headset, mobile phone, band, glasses, and the like. The electronic devices determine, based on the obtained network capability information of the another electronic device, a network connection supported by the another electronic device, and the electronic devices determine, based on the network connection supported by the another electronic device and the network connection supported by the electronic devices themselves, a network connection mode supported by two electronic devices. For example, there is no connection (no-connection, NC) between the mobile phone and the PAD in Table 1. The mobile phone and a personal computer (personal computer, PC) may be connected by using a basic rate (basic rate, BR) Bluetooth or WiFi. BR Bluetooth is also referred to as classic Bluetooth. In other words, both the mobile phone and the PC support a BR Bluetooth connection and a WiFi connection. The mobile phone and the large screen may be connected through Bluetooth (Bluetooth, BT) or WiFi. In other words, both the mobile phone and the PC support BT and WiFi connections.

**Table 2**

| | Mobile phone | PAD | PC | Large screen | Sound box | Headset | Watch | Band | Glasses |
|---|---|---|---|---|---|---|---|---|---|
| Mobile phone | | NC | BR/WiFi | BT/WiFi | NC | BT | WiFi | BT | NC |
| PAD | | | BR/WiFi | BT/WiFi | WiFi | NC | NC | NC | WiFi |
| PC | | | | BR/WiFi | NC | NC | NC | NC | NC |
| Large screen | | | | | WiFi | NC | NC | NC | NC |
| Sound box | | | | | | NC | NC | NC | NC |
| Headset | | | | | | | NC | NC | NC |
| Watch | | | | | | | | NC | NC |
| Band | | | | | | | | | NC |
| Glasses | | | | | | | | | |

It may be understood that each of the plurality of electronic devices may store a network topology relationship shown in Table 2, and Table 2 stored in each electronic device may be consistent.

Optionally, the plurality of electronic devices may also determine routing information of any two electronic devices based on a stored network topology relationship. For example, with reference to Table 2, a BT connection may be used from the mobile phone to the band, and a WiFi connection may be used from the mobile phone to the watch. Routing information from the mobile phone to the sound box may be: routing from the mobile phone to the large screen by using BT/WiFi, and routing from the large screen to the sound box by using WiFi.

It may be understood that, if any two electronic devices exchange information with each other, it may be considered that the two electronic devices are online. In other words, the electronic devices can be detected. One electronic device (for example, an electronic device used as a central node) in the plurality of electronic devices may determine whether each electronic device is online, and synchronize information about whether each electronic device is online to another electronic device, or each electronic device determines, based on exchanged information about another electronic device, whether the another electronic device is online. Each electronic device may store information about whether another electronic device is online, and a storage form is not limited.

For example, in FIG. 4, after the device A and the device B discover each other, the device A exchanges information with the device B, and the device B may send detected information about the device F to the device A. In this case, the device A may not only determine that the device B is online, but also determine that the device F is online. In addition, the device B may also determine that the device A and the device F are online, and the device F may also determine that the device A and the device B are online. In this way, after exchanging information, the electronic devices may determine which electronic devices are online or offline. For example, Table 3 corresponding to Table 2 shows information about whether each electronic device is online, and each electronic device may store a table shown in Table 2. In Table 3, "O" indicates that an electronic device is online, and "X" indicates that an electronic device is offline. If a row corresponding to an electronic device is allX, it is considered that the electronic device is offline.

**Table 3**

| | Mobile phone | PAD | PC | Large screen | Sound box | Headset | Watch | Band | Glasses |
|---|---|---|---|---|---|---|---|---|---|
| Mobile phone | | X | O | O | X | O | O | O | X |
| PAD | X | | O | O | O | X | X | X | O |
| PC | O | O | | O | X | X | X | X | X |
| Large screen | O | O | O | | O | X | X | X | X |
| Sound box | X | O | X | O | | X | X | X | X |
| Headset | O | X | X | X | X | | X | X | X |
| Watch | O | X | X | X | X | X | | X | X |
| Band | O | X | X | X | X | X | X | | X |
| Glasses | X | O | X | X | X | X | X | X | |

It may be understood that each of the plurality of electronic devices may store whether each electronic device is online. For example, as shown in Table 3, whether each electronic device is online that may be stored by each electronic device may be consistent. In other words, if one electronic device is online, and some electronic devices may detect that the electronic device is online, because the electronic devices exchange information, and all the plurality of electronic devices may determine that the electronic device is online.

It should be noted that, that an electronic device is online may be understood as that an electronic device can be found, or may be understood as that an electronic device is in a communicable area or can be found, or the like. That an electronic device is online does not necessarily mean that the electronic device has an established network connection. If an electronic device has an established network connection, it may be considered that the electronic device is online, or even if the electronic device does not have an established network connection, it may be considered that the electronic device is online provided that the electronic device can be found or detected by another electronic device. In other words, online means that the electronic device can be discovered, and does not mean that there is already a data channel.

It should also be noted that the electronic device may not store information about whether each electronic device is online, and only needs to store a network topology relationship between the electronic devices.

Optionally, the plurality of electronic devices may determine the network topology relationship between the plurality of electronic devices based on exchanged information by using respective processors 110 shown in FIG. 1. The plurality of electronic devices may store the network topology relationship by using respective internal memories 121 shown in FIG. 1.

Optionally, the plurality of electronic devices may determine, by using respective processors 110 shown in FIG. 1, whether the plurality of electronic devices are online. The plurality of electronic devices may store, by using respective internal memories 121 shown in FIG. 1, information about whether each electronic device is online.

The plurality of electronic devices in a method 300 may be a combination of electronic devices of different types and/or in different scenarios. For example, the plurality of electronic devices may be mobile phones, head units, smart sound boxes, smart headsets, and other different types of devices. Alternatively, these different types of electronic devices are in different scenarios. For example, the plurality of electronic devices may include a mobile phone at a working place and a tablet at a residence place. In this way, the network topology relationship obtained by using the method 300 is applicable to different types of electronic devices to transmit data, or is applicable to different types of electronic devices in different scenarios to transmit data, so that applicability can be improved, or systematic planning can be performed on a plurality of electronic devices. In addition, a physical shape of the network topology relationship in the method 300 may be a mesh topology, a star topology, a ring topology, or a topology of another shape.

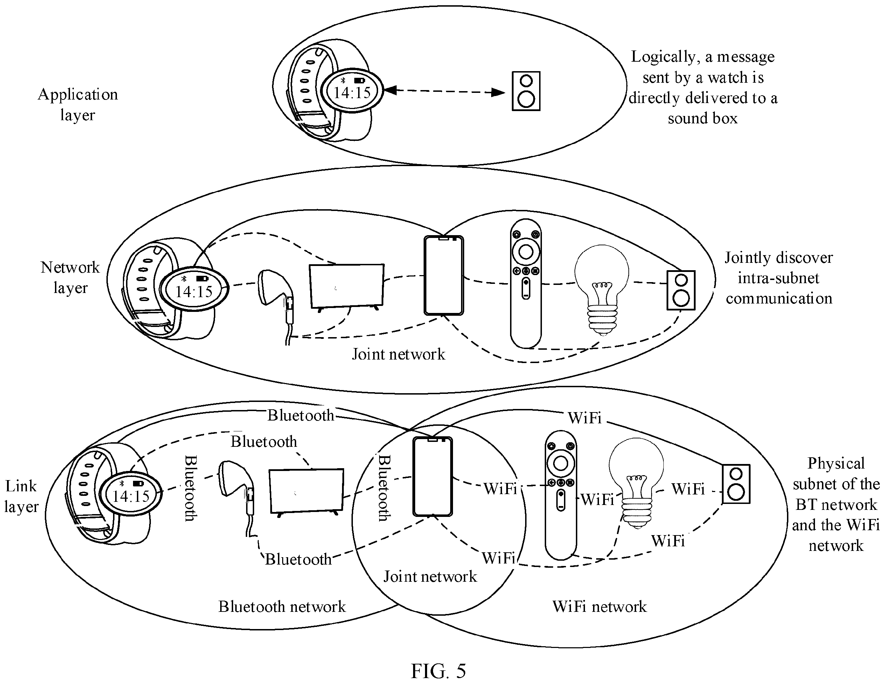

To better understand the network topology relationship in the method 300, the following describes the network topology relationship in the method 300 with reference to FIG. 5. As shown in FIG. 5, a user can implement communication between two devices at an application layer, which is actually a physical subnet formed by different network connections at a link layer. Communication between different electronic devices may be performed by using an actual network connection between electronic devices at the link layer, and communication between electronic devices at a network layer may be performed by using different paths. The network topology relationship is represented at the link layer as a network connection mode supported by electronic devices, and is represented at the network layer as a data transmission path existing between the electronic devices. At the application layer, when data is transmitted between different electronic devices, a user does not perceive a network relationship between the network layer and the link layer, and can only perceive that data exchange is completed between two electronic devices at the application layer. For example, as shown in FIG. 5, at the application layer, the watch and the sound box may be logically directly accessible, and can directly implement data exchange. The watch and the sound box can directly communicate at the application layer because hybrid connection networking is performed at the network layer and the link layer. Data may be transmitted between the watch and the mobile phone at the link layer by using a Bluetooth network, and data may be transmitted between the mobile phone and the sound box at the link layer by using a WiFi network. In this way, a network connection between the watch and the sound box and a network connection between the mobile phone and the sound box exist at the network layer of the network connection for transmitting data between the watch and the sound box. In FIG. 5, a solid line at a network layer represents an actual network connection in a data transmission process, and a dashed line represents a supported network connection but no data is transmitted. Similarly, a solid line at a link layer represents a Bluetooth network and a WiFi network that are actually used by two electronic devices in a data transmission process, and a dashed line represents a Bluetooth network and a WiFi network that are supported by the two electronic devices, but the Bluetooth network and the WiFi network are not used to transmit data.

For example, a network topology relationship between electronic devices at a network layer is shown in FIG. 6. A device A, a device B, a device C, and a router are connected by using a network, and every two of the device A, the device B, the device C, and a device G are connected by using a network. The device B is separately connected to a device D, a device E, and a device F by using a network. The device G may be a remote device.

A network topology relationship between electronic devices at a link layer corresponding to FIG. 6 is shown in FIG. 7. In FIG. 7, the device A, the device B, the device C, and the router are connected by using WiFi; there are end-to-end connections between the device A, the device B, and the device C by using ble, WiFi, and WiFi-p2p; there are end-to-end ble connections between the device B, the device D, and the device E; there are end-to-end USB connections between the device B and the device F; and there are end-to-end LAN or p2p connections between the device A, the device B, the device C, and the device G. In FIG. 6 and FIG. 7, a solid line indicates that a network connection has been established, and a dashed line indicates that these network connections may exist between two devices, but have not been established yet.

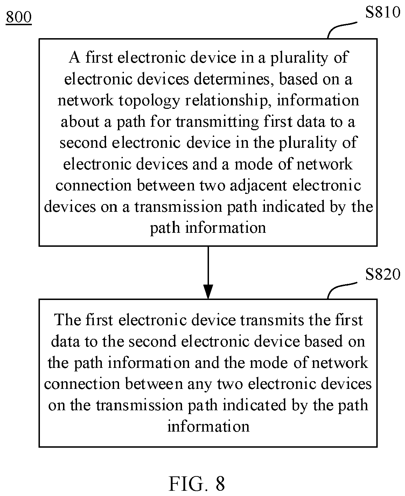

The following specifically describes, with reference to FIG. 8, how electronic devices transmit data by using an established network topology relationship in the method 300. FIG. 8 describes only data transmission between two electronic devices. A manner of data transmission between other electronic devices is consistent with the transmission manner shown in FIG. 8. Details are not described in this embodiment of this application. As shown in FIG. 8, a method 800 includes the following steps.

S810. A first electronic device in a plurality of electronic devices determines, by using a network topology relationship, information about a path for transmitting first data to a second electronic device in the plurality of electronic devices and a mode of network connection between two adjacent electronic devices on a transmission path indicated by the path information.

The path information is used to indicate an electronic device through which the first data transmitted by the first electronic device to the second electronic device passes.

Optionally, the first electronic device may be a service initiator. Alternatively, a central node in the network topology relationship may determine path information and a mode of network connection between two adjacent electronic devices on a transmission path indicated by the path information, and send the information to the first electronic device.

Specifically, S810 includes: The first electronic device selects, based on the network topology relationship, transmission paths that can reach the second electronic device and modes of network connection between electronic devices on these transmission paths. For example, the first electronic device first sends the first data to a fifth electronic device by using a WiFi connection to the fifth electronic device, and then the fifth electronic device sends the first data to the second electronic device by using a mode of Bluetooth transmission between the fifth electronic device and the second electronic device. In this example, the transmission path that may be determined by the first electronic device based on the network topology relationship is the first electronic device-the fifth electronic device-the second electronic device, on the transmission path, a mode of connection between the first electronic device and the fifth electronic device is a WiFi connection, and a mode of connection between the fifth electronic device and the second electronic device is a Bluetooth connection.

Optionally, S810 further includes: The first electronic device selects, based on the network topology relationship and the exchanged information about the another electronic device in S302, a transmission path that can reach the second electronic device and a mode of network connection between electronic devices on these transmission paths, for example, determine, based on the network topology relationship and at least one of processing capability information of the electronic devices, network quality of the electronic devices, power information of the electronic devices, motion information of the electronic devices, weight information of the electronic devices, and role information of the electronic devices, an electronic device that the first data passes through.

Optionally, S810 further includes: The first electronic device determines, based on the network topology relationship and whether each electronic device is reachable through communication, transmission paths that can reach the second electronic device and modes of network connection between electronic devices on these transmission paths.

In addition, if the first electronic device determines that there are a plurality of modes of network connection between two electronic devices on the transmission path, the first electronic device determines, in at least one of the following manners, which network connection mode is to be used.

Manner 1: The first electronic device may determine, based on a currently established network connection of the first electronic device, a network connection mode used by an electronic device adjacent to the first electronic device on the transmission path. The first electronic device is adjacent to the fifth electronic device on the transmission path. If a network connection between the first electronic device and the fifth electronic device is being connected and is not disconnected, the network connection mode that is being connected may be reused. For example, in the network topology relationship, the first electronic device and the fifth electronic device may perform transmission by using WiFi or Bluetooth. If the first electronic device and the fifth electronic device have established a Bluetooth connection, it may be determined that Bluetooth is a mode of network connection between the first electronic device and the fifth electronic device. If no established network connection exists between the first electronic device and the fifth electronic device, the first electronic device determines a network connection between the first electronic device and the fifth electronic device based on a feature of the first data.

In addition, the first electronic device may determine a network connection between other adjacent electronic devices on the transmission path with reference to a feature of the first data. For example, if the first electronic device determines that two electronic devices on the transmission path may perform transmission by using WiFi or Bluetooth, because a delay of WiFi transmission is lower than a delay of Bluetooth transmission, and the first data is data with a high delay requirement, the first electronic device may determine that WiFi is a mode of network connection between the two electronic devices. If the first data is data with a low delay requirement, because Bluetooth reduces power consumption, the first electronic device may determine that Bluetooth is a mode of network connection between the two electronic devices.

Manner 2: The first electronic device may determine, based on a network connection that has been currently established by the first electronic device and a feature of the first data, which network connection mode is used by an electronic device adjacent to the first electronic device on the transmission path. For example, in the network topology relationship, the first electronic device and the fifth electronic device may perform transmission by using WiFi or Bluetooth, the first data is data with a high delay requirement, and WiFi between the two electronic devices is in a connected state. In this case, the first electronic device may determine that WiFi is a mode of network connection between the first electronic device and the fifth electronic device. For another example, in the network topology relationship, the first electronic device and the fifth electronic device may perform transmission by using WiFi or Bluetooth, the first data is data with a low delay requirement, and Bluetooth of the two electronic devices is in a connected state. In this case, the first electronic device may determine that Bluetooth is a mode of network connection between the first electronic device and the fifth electronic device. For another example, in the network topology relationship, the first electronic device and the fifth electronic device may perform transmission by using WiFi or Bluetooth. The first data is data with a high delay requirement, Bluetooth of the two electronic devices is in a connected state, and WiFi is in a disconnected state. Because Bluetooth in the connected state cannot meet the delay requirement of the first data, the first electronic device may determine that WiFi is a mode of network connection between the first electronic device and the fifth electronic device. For another example, in the network topology relationship, the first electronic device and the fifth electronic device may perform transmission by using WiFi or Bluetooth, the first data is data with a low delay requirement, WiFi of the two electronic devices is in a connected state, and Bluetooth is in a disconnected state. Because WiFi in the connected state can meet the delay requirement of the first data, the first electronic device may determine that WiFi is a mode of network connection between the first electronic device and the fifth electronic device, or the first electronic device or the fifth electronic device has a relatively high power consumption requirement, and the first electronic device may determine that Bluetooth is a mode of network connection between the first electronic device and the fifth electronic device.

Manner 3: The first electronic device may select a network connection mode or the like from a plurality of network connection modes with reference to a feature of the first data. For example, if two electronic devices on a transmission path may perform transmission by using WiFi or Bluetooth, because a delay of WiFi transmission is lower than a delay of Bluetooth transmission, and the first data is data with a high delay requirement, the first electronic device may determine that WiFi is a mode of network connection between the two electronic devices. If the first data is data with a low delay requirement, the first electronic device may determine that Bluetooth is a mode of network connection between the two electronic devices.

Manner 4: The first electronic device may select any network connection mode from a plurality of network connection modes of the two electronic devices.

In the foregoing several manners, the first data may be data with a high delay requirement or data with a low delay requirement, and a feature of the first data is a delay feature. Optionally, a data volume of the first data may be large or small, and a feature of the first data may be a data volume. Optionally, the first data may be data with a high transmission rate requirement or may be data with a low transmission rate requirement, and a feature of the first data may be a transmission rate requirement.

It may be understood that the first electronic device may alternatively determine a network connection mode from a plurality of network connection modes of the two electronic devices in another manner. This is not limited in this embodiment of this application.

For example, with reference to Table 2, if the network topology relationship is shown in Table 2, the mobile phone needs to transmit data to the glasses, there is no network connection between the mobile phone and the glasses, but there is a WiFi connection between the glasses and the PAD, there is no network connection between the PAD and the mobile phone, but there is a BR or WiFi connection between the PAD and the PC, and there is a BR or WiFi connection between the PC and the mobile phone. Therefore, the mobile phone may determine that a path for transmitting data to the glasses is: mobile phone-PC-PAD-glasses. The mobile phone may determine the transmission path with reference to at least one of the foregoing four manners: a mode of network connection between any two electronic devices on the path of the mobile phone-PC-PAD-glasses.

For example, if the network topology relationship is shown in Table 2, the mobile phone needs to transmit data to the glasses, there is no network connection between the mobile phone and the glasses, but there is a WiFi connection between the glasses and the PAD, there is no network connection between the PAD and the mobile phone, but there is a BR or WiFi connection between the PAD and the PC, and there is a BR or WiFi connection between the PC and the mobile phone. Therefore, the mobile phone needs to determine whether these devices are online. If the online information is shown in Table 3, the mobile phone may determine that the PC, the pad, and the glasses are all online, and the mobile phone may determine that a path for transmitting data to the glasses is: mobile phone-PC-PAD-glasses. The mobile phone may determine the transmission path with reference to at least one of the foregoing four manners: a mode of network connection between any two electronic devices of the mobile phone-PC-PAD-glasses.

In addition, if the first electronic device determines that there is a plurality of transmission paths for transmitting the first data. If the electronic devices further exchange the power information, the network quality, and the processing capability information of the electronic devices, optionally, the first electronic device may select one transmission path from the plurality of transmission paths with reference to at least one of the power of the electronic device, the service type of the first data, the delay requirement of the first data, the processing capability information of the electronic device, and the network quality, and a network topology relationship. Specifically, the first electronic device first selects, based on a network topology relationship, a plurality of transmission paths that can reach the second electronic device, and can also determine a mode of network connection between electronic devices on these transmission paths. The first electronic device needs to select one transmission path from the plurality of paths with reference to at least one of power of electronic devices on the plurality of paths, a service type of the first data, a delay requirement of the first data, and a network bandwidth, and transmit data by using the transmission path.

Optionally, if the information exchanged in S302 includes service information of each electronic device, the first electronic device may determine, based on a service supported by the second electronic device, to send the first data corresponding to the service supported by the second electronic device to the second electronic device. For example, the first electronic device needs to project the first data to the second electronic device, and the first electronic device needs to determine that the second electronic device supports a projection service before transmitting the first data corresponding to the projection service.

S820. The first electronic device transmits the first data to the second electronic device based on the path information and the mode of network connection between two adjacent electronic devices on the transmission path indicated by the path information.

For example, S820 includes: The first electronic device establishes a corresponding network connection to the fifth electronic device indicated by the path information, and transmits the first data in an established network connection mode; and the fifth electronic device establishes a network connection mode to the second electronic device, and transmits the first data in the established network connection mode. When the network connection between the two electronic devices indicated by the path information is already in a connected state, re-establishment is not required. For example, the first electronic device determines that transmission is performed between the fifth electronic device and the second electronic device on the transmission path by using WiFi. When the WiFi between the fifth electronic device and the second electronic device is in a connected state, the fifth electronic device and the second electronic device may continue to transmit data by using a WiFi channel in the connected state. When WiFi between the fifth electronic device and the second electronic device is not in the connected state, the fifth electronic device and the second electronic device may establish a WiFi connection to transmit data. In this way, the first data may arrive at the second electronic device. Certainly, the transmission path indicated by the path information may include another electronic device other than the fifth electronic device, or may not include the fifth electronic device.

It should be noted that the first data may also be directly transmitted between the first electronic device and the second electronic device. In other words, path information determined by the first electronic device may include only the first electronic device and the second electronic device, without other electronic devices.

It should be noted that, if there is a network connection between two adjacent electronic devices on the transmission path indicated by the path information, the network connection does not need to be re-established, and only the existing network connection needs to be used to transmit the first data. If no network connection exists between two adjacent electronic devices on the transmission path indicated by the path information, a corresponding network connection is established, and the first data is transmitted by using the established network connection. The following describes a manner of establishing a network connection:
Manner 1: Before S820, the method 800 further includes: After the first electronic device determines the transmission path and the mode of network connection between two adjacent electronic devices on the transmission path, the first electronic device may directly or indirectly send network connection indication information (used to indicate a network connection between two adjacent electronic devices on the transmission path) to each electronic device on the transmission path, and establish a corresponding network connection between the two adj acent electronic devices based on the network connection indication information. For example, a transmission path is first electronic device-fifth electronic device-second electronic device, the first electronic device determines that a network connection between the first electronic device and the fifth electronic device is ble, and a network connection between the fifth electronic device and the second electronic device is WiFi-p2p. The first electronic device establishes a ble connection to the fifth electronic device, and the first electronic device sends network connection indication information to the fifth electronic device by using the established ble connection, where the network connection indication information is used to indicate that a network connection between the fifth electronic device and the second electronic device is a WiFi-p2p connection. The fifth electronic device establishes a WiFi-p2p connection to the second electronic device. In other words, in the method 800, before data is transmitted, a network connection on a transmission path may be established, or some network connections are in the connected state, and data is indirectly and directly transmitted without establishing a network.

In Manner 1, a packet header of a packet carrying the first data may carry path information and a mode of network connection between two currently adjacent electronic devices on a transmission path indicated by the path information. In this way, after receiving the first data, any electronic device on the transmission path may determine a next-hop node based on the path information.

In addition, a source address in the packet header of the packet carrying the first data is an address of the first electronic device, and a destination address is an address of the second electronic device. For example, the source address of the first data is an ID of the first electronic device, and the destination address is an ID of the second electronic device. In this way, it can be ensured that the first data can reach the second electronic device in an entire routing process, and the second electronic device can also learn, based on the source address, that the first data comes from the first electronic device.

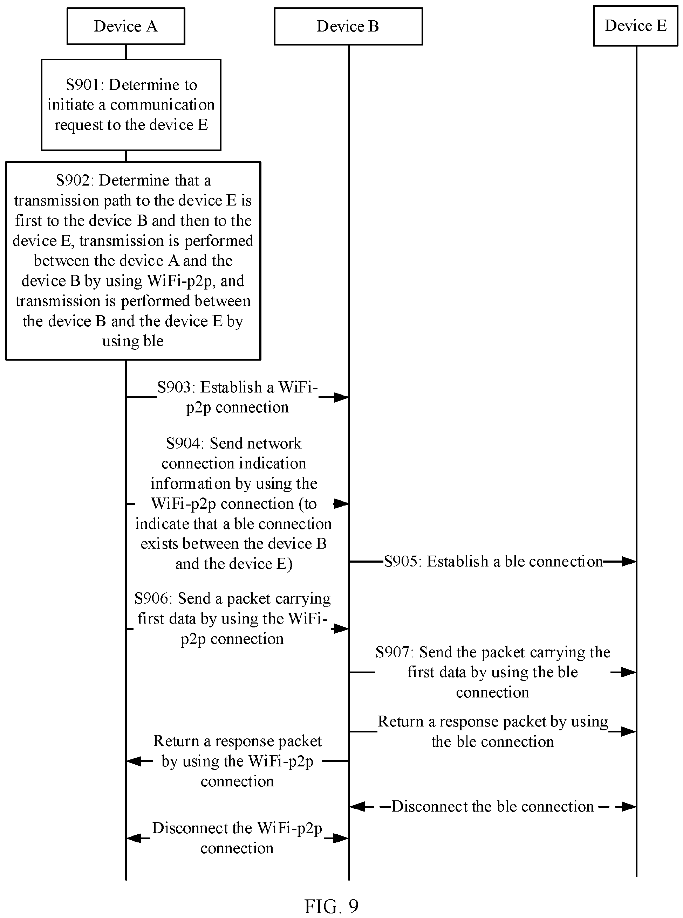

For better understanding of Manner 1, a premise of the embodiment shown in FIG. 9 is that no WiFi-p2p connection is established between the device A and the device B, and no ble connection is established between the device B and the device E. If the electronic device stores the network topology relationship shown in FIG. 7, the following describes a data transmission process with reference to FIG. 9. As shown in FIG. 9, the method includes the following steps.

S901: The device A determines that a communication request needs to be initiated to the device E.

S902: The device A determines, according to S810, that a transmission path from the device A to the device E is first to the device B and then to the device E, and the device A may determine that transmission is performed between the device A and the device B by using WiFi-p2p. In this way, the routing information is device A-device B-device E, WiFi-p2p transmission is used between the device A and the device B, and ble transmission is used between the device B and the device E.

S903: The device A establishes a WiFi-p2p connection to the device B.

S904: The device A sends network connection indication information by using the established WiFi-p2p connection, to indicate that a ble connection exists between the device B and the device E.

S905: The device B establishes a ble connection to the device E.

In other words, before transmitting data, the device B may learn that a ble connection exists between the device B and the device E, and establish the ble in advance.

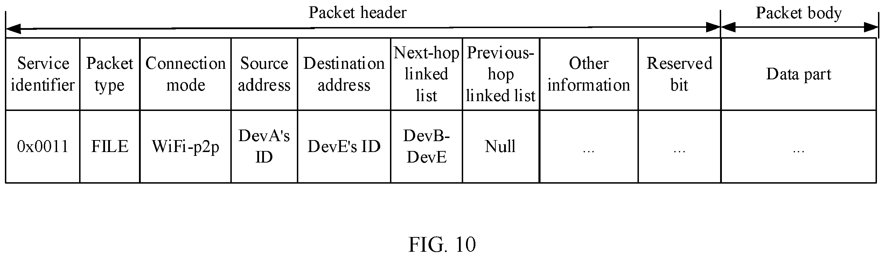

S906: The device A sends, to the device B by using the WiFi-p2p connection, a packet carrying the first data. A format of the packet is shown in FIG. 10. A service identifier is used to uniquely identify a current service. A packet type indicates that a type of the current packet is a file type. A connection mode indicates that a WiFi-p2p connection is used between the device A and the device B. A source address is an ID of the device A, a destination address is an ID of the device E, and a next-hop linked list of the device A is device B-device E. Because the device A is a first node, a previous-hop linked list of the device A is empty, and a data part in FIG. 10 may be the first data.

It should be understood that S906 is performed after S903, but a sequence of S906 and any one of S904 to S905 is not limited.

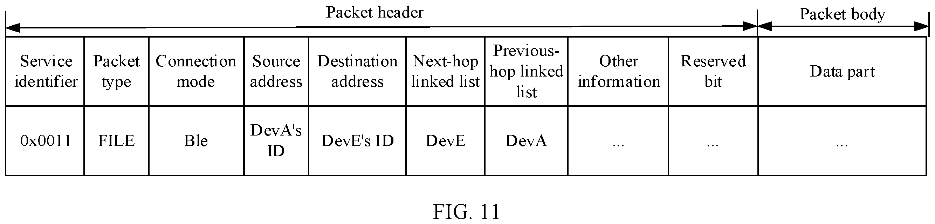

S907: The device B sends, to the device E by using the ble connection, the packet carrying the first data. A format of the packet sent to the device E is shown in FIG. 11. Different from FIG. 10, a connection mode in FIG. 11 is ble, a previous-hop linked list in FIG. 11 is the device A, and a next-hop linked list in FIG. 11 is the device E.

After receiving the packet, the device E replies with a response packet in a same manner along the original path, where the response packet is used to indicate that the device E receives the first data.

In addition, after completing packet transmission between the device A and the device B, the WiFi-p2p connection may be disconnected, and after completing packet transmission between the device B and the device E, the ble connection may be disconnected.

Manner 2: In S820, a packet header of a packet carrying the first data may carry path information and a mode of network connection between any two adjacent electronic devices on a transmission path indicated by the path information. In this way, after receiving the first data, any electronic device on the transmission path may determine a next-hop node and a mode of network connection between the electronic device and the next-hop node based on the path information and the mode of network connection between the electronic devices on the transmission path indicated by the path information.

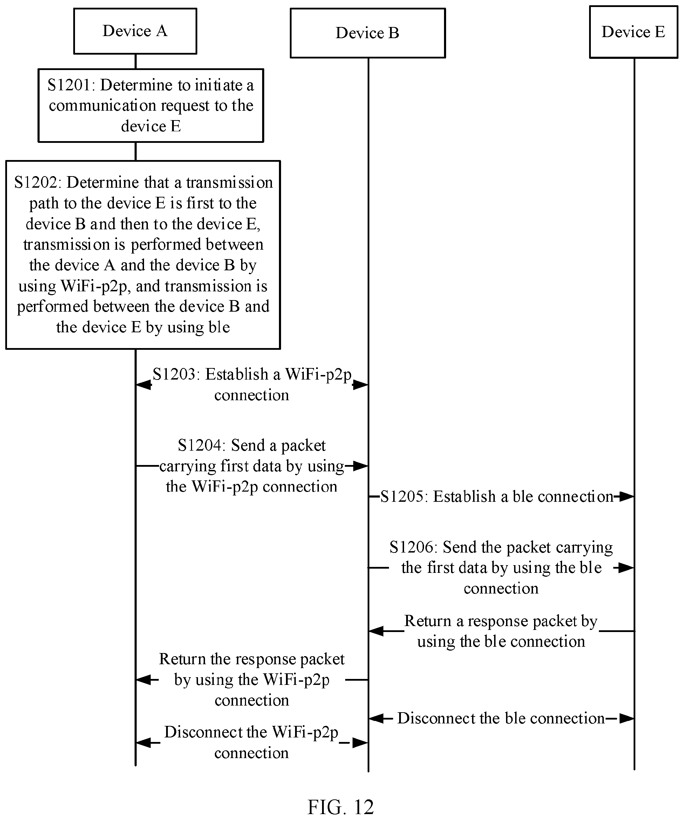

For better understanding of Manner 2, if the electronic device stores the network topology relationship in FIG. 7, a premise of the embodiment shown in FIG. 12 is that no WiFi-p2p connection is established between the device A and the device B, and no ble connection is established between the device B and the device E. The following describes a data transmission process with reference to FIG. 12. As shown in FIG. 12, the method includes the following steps.

S1201: The device A determines to initiate a communication request to the device E.

S1202: The device A determines, according to S810, that a transmission path from the device A to the device E is first to the device B and then to the device E, and the device A may determine that transmission is performed between the device A and the device B by using WiFi-p2p. In this way, the routing information is device A-device B-device E, WiFi-p2p transmission is used between the device A and the device B, and ble transmission is used between the device B and the device E.

S1203: The device A establishes a WiFi-p2p connection to the device B.

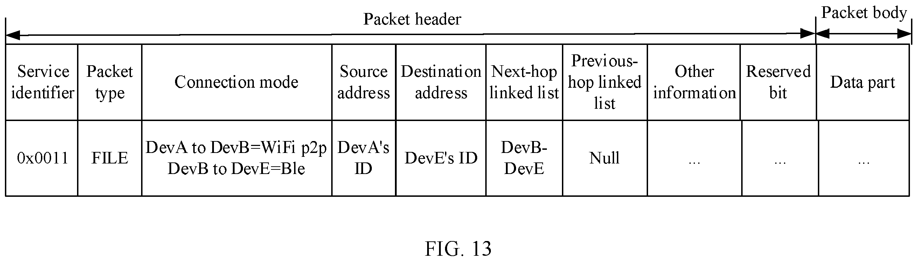

S1204: The device A sends, to the device B, a packet carrying the first data, where a format of the packet carrying the first data is shown in FIG. 13, a connection mode field indicates that a WiFi-p2p connection is between the device A and the device B, a ble connection is between the device B and the device E, and definitions of other fields are the same as those in FIG. 10.

S1205: The device B determines, based on the connection mode in FIG. 13, that a connection to the device E is a ble connection, and establishes the ble connection to the device E.

In other words, in S1205, the device B may learn, based on the packet carrying the first data, that the connection to the device E is a ble connection.

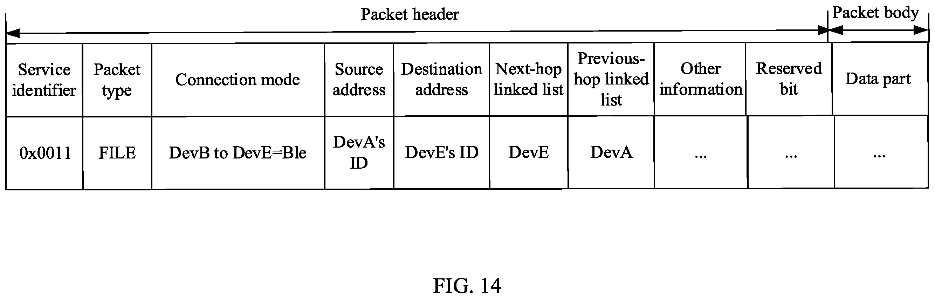

S1206: The device B sends, to the device E, the packet carrying the first data, where a format of the packet carrying the first data is shown in FIG. 14, a connection mode field in 14 indicates that a ble connection is between the device B and the device E, and definitions of other fields are the same as those in FIG. 10.

Certainly, the connection mode field in FIG. 14 may also be the connection mode field in FIG. 13.

After receiving the packet, the device E replies with a response packet in a same manner along the original path.

In addition, after completing packet transmission between the device A and the device B, the WiFi-p2p connection may be disconnected, and after completing packet transmission between the device B and the device E, the ble connection may be disconnected.

In an alternative manner in S810 and S820, a source address of the first data is an address of the first electronic device, and a destination address of the first data is an address of the second electronic device. For example, the source address of the first data is an ID of the first electronic device, and the destination address is an ID of the second electronic device. Any electronic device in the network topology relationship may determine a next node of the first data based on the network topology relationship and a local policy. Specifically, the first electronic device only needs to determine, based on the network topology relationship and the local policy, a next node at which the first data arrives at the second electronic device. After receiving the first data, the next node determines, based on the network topology relationship and the local policy, a next node at which the first data arrives at the second electronic device, and may sequentially transmit the first data to the second electronic device. In this way, the data packet of the first data does not need to carry the path information and the mode of network connection between the electronic devices on the transmission path indicated by the path information. When receiving the first data, each electronic device determines a next-hop node and a mode of network connection between the electronic device and the next-hop node.

The local policy mentioned above may be a local policy formulated by the electronic device itself based on exchanged information about each electronic device. Local policies formulated by all electronic devices may be the same or may be different. This is not limited in this embodiment of this application.

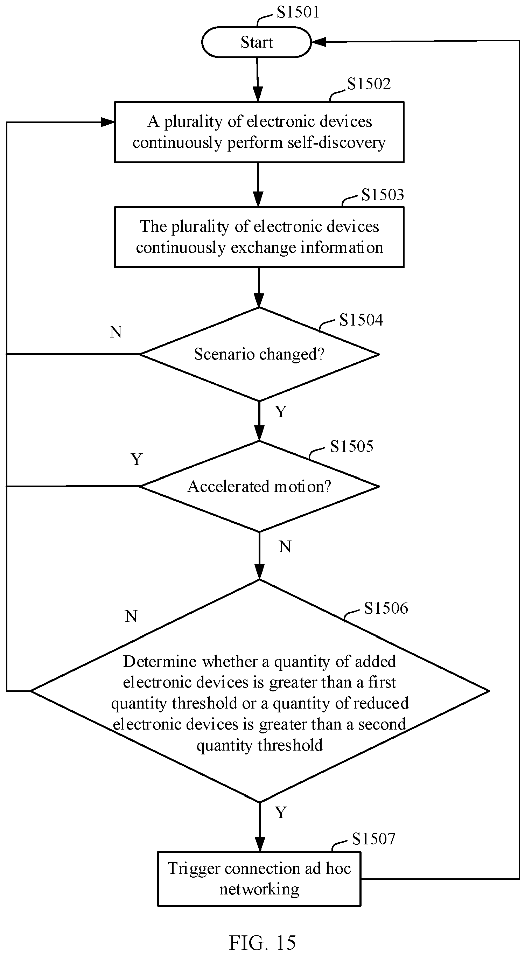

Optionally, in the method 300, electronic devices may continuously discover each other, causing a network topology relationship to continuously change, so that a plurality of electronic devices need to continuously exchange information and continuously update the network topology relationship. This causes relatively high overheads and relatively high power consumption. Therefore, the determined network topology relationship in the method 300 is updated periodically or updated after a trigger condition is met. The following describes the update of the network topology relationship in the method 300 with reference to FIG. 15.

S1501: Start

S1502: A plurality of electronic devices continuously perform self-discovery.

S1503: The plurality of electronic devices continuously exchange information with each other.

Optionally, the continuous information exchange between the plurality of electronic devices in S1503 may be periodic information exchange, or information exchange after information changes. For example, if an electronic device detects that a network connection between the electronic device and another device changes from a connected state to a disconnected state, the changed information may be exchanged.

Specifically, for information exchanged by the electronic device, refer to the description of S302.

S1504: The first electronic device determines, based on the exchanged information, whether a scenario of the one or more electronic devices changes. If the scenario changes, S1505 is performed. If the scenario does not change, S1502 is returned.

Optionally, the first electronic device stores the network topology relationship obtained by using the method 300. If any type of information in S302 of any electronic device in the network topology relationship changes, the electronic device directly or indirectly sends changed information to the first electronic device, and the first electronic device determines, based on the changed information, whether the scenario of the electronic device changes. For example, the changed information includes an SSID, and the first electronic device determines, based on the SSID, whether a scenario of an electronic device changes. For example, an SSID of an electronic device changes from an SSID of a home network to an SSID of an in-vehicle network, the electronic device directly or indirectly sends a changed SSID to the first electronic device, and the first electronic device determines, based on the changed SSID of the in-vehicle network, that a scenario of the electronic device changes.

Optionally, the first electronic device may further determine, based on the SSID and at least one of the network capability information, the network quality, and the motion information, whether a scenario of an electronic device changes.

In some possible implementations, the first electronic device may be any electronic device in a plurality of electronic devices.

In some possible implementations, the first electronic device may be a central node in a plurality of electronic devices. In this case, information exchanged by the plurality of electronic devices includes role information. Alternatively, the first electronic device may be a node with a relatively high weight in a plurality of electronic devices. In this case, information exchanged by the plurality of electronic devices includes weight information.

S1505: The first electronic device determines, based on the exchanged information, whether an electronic device in the plurality of electronic devices is an accelerated motion.

Specifically, in S302, the information exchanged by the electronic devices includes motion information of the electronic devices. In this way, the first electronic device may determine motion statuses of a plurality of electronic devices based on the motion information. When the first electronic device determines that an electronic device in the plurality of electronic devices is moving at an accelerated speed, the first electronic device returns to S1502; or when the first electronic device determines that a motion speed of an electronic device in the plurality of electronic devices is relatively small, the first electronic device performs S1506.

In S1505, the first electronic device may determine a speed variation based on a motion speed indicated by motion information of an electronic device and a historical motion speed of the electronic device. If the speed variation is greater than a speed threshold, it is considered that the electronic device moves at an accelerated speed. If the speed variation is not greater than a speed threshold, it is considered that the electronic device does not move at an accelerated speed. Alternatively, the first electronic device may determine an acceleration that is of an electronic device and that is indicated by motion information of the electronic device. If the acceleration is greater than a speed threshold, it is considered that the electronic device moves at an accelerated speed. If the acceleration is not greater than a speed threshold, it is considered that the electronic device does not move at an accelerated speed.

S1506: The first electronic device determines whether a quantity of added electronic devices is greater than a first quantity threshold or a quantity of reduced electronic devices is greater than a second data threshold.

Specifically, the first electronic device determines the quantity of added electronic devices based on the exchanged information. The first electronic device determines the quantity of reduced electronic devices according to offline electronic devices. If the quantity of added electronic devices is greater than the first quantity threshold or the quantity of reduced electronic devices is greater than the second data threshold, S1507 is performed. If the quantity of added electronic devices is less than or equal to the first quantity threshold or the quantity of reduced electronic devices is less than or equal to the second data threshold, S1502 is returned.

Specifically, as electronic devices in the network are added or reduced, the first electronic device may determine, based on a quantity of added electronic devices or a quantity of reduced electronic devices, whether ad hoc networking needs to be triggered. For example, in the method 300, 10 electronic devices form a network topology relationship. As devices continuously discover each other and exchange information, for example, after three electronic devices are added to perform S1502 to S1503, the first electronic device receives information exchanged by the three added electronic devices. Therefore, the first electronic device may determine a quantity of added electronic devices. For another example, if the first electronic device periodically fails to receive information about the electronic device, that is, fails to detect the information about the electronic device, the first electronic device may determine that the electronic device is not online. In this way, a row corresponding to the electronic device in Table 2 is all "X", and an offline electronic device may also be referred to as a reduced electronic device.

Optionally, the first quantity threshold and the second data threshold may be specified in a protocol, or may be determined by one electronic device and sent to another electronic device.

S1507: The first electronic device triggers connection ad hoc networking.

Specifically, that the first electronic device triggers connection ad hoc networking may be that the first electronic device sends a networking instruction to another electronic device in the network topology relationship, and after receiving the networking instruction, the another electronic device updates, according to the networking instruction, a schematic diagram of the network topology relationship stored in the another electronic device. Specifically, the networking instruction sent by the first electronic device to the another electronic device may be sequentially sent to each electronic device through multi-hop transmission by electronic devices in the network topology relationship. For example, the first electronic device starts ad hoc networking, and may send a networking instruction to a fourth electronic device. After receiving the networking instruction, the fourth electronic device starts ad hoc networking and sends the networking instruction to the second electronic device. After receiving the networking instruction, the second electronic device starts ad hoc networking.

Optionally, if a network connection has been established between the two electronic devices, the networking instruction may be sent by using the established network connection. If no network connection is established between the two electronic devices, the network connection may be established between the two electronic devices, and then the networking instruction is transmitted by using the established network connection.

It may be understood that a format of the networking instruction may be specified in a protocol, and the plurality of electronic devices may parse the networking instruction according to the protocol.

The first electronic device may enable intelligent connection networking to trigger connection ad hoc networking. For example, a control of the first electronic device may enable connection networking, or a control of the first electronic device may trigger display of a display interface to remind a user whether to enable ad hoc networking.

After the first electronic device triggers connection ad hoc networking, S1501 is returned.

In the foregoing method in FIG. 15, ad hoc networking is triggered only when a scenario of an electronic device changes, a quantity of changed electronic devices meets a threshold, and a motion of the electronic device is not an accelerated motion. A sequence of the changes is not limited. In other words, a sequence of the three steps S1504 to S1506 is not limited. The quantity of changed electronic devices may be first determined, then whether the motion of the electronic device is an accelerated motion is determined, and finally whether the scenario changes is determined. Alternatively, the method 1500 may include that any condition in S1504 to S1506 may trigger ad hoc networking, or may include that two conditions in S1504 to S1506 may trigger ad hoc networking. This is not limited in this embodiment of this application.

It may be understood that, in the method 1500, only an example of a condition that needs to be met for triggering ad hoc networking is described, and the ad hoc networking may alternatively be triggered by another condition. In other words, the condition for triggering ad hoc networking is not limited in this embodiment of this application.

It should be noted that, that each electronic device enables intelligent connection networking may be understood as that each electronic device updates a network topology relationship stored in the electronic device.

It should also be noted that data transmitted in the method 800 may be data transmitted by using the network topology relationship obtained by using the method 300, or may be data transmitted by using the network topology relationship updated and obtained by using the method 1500.

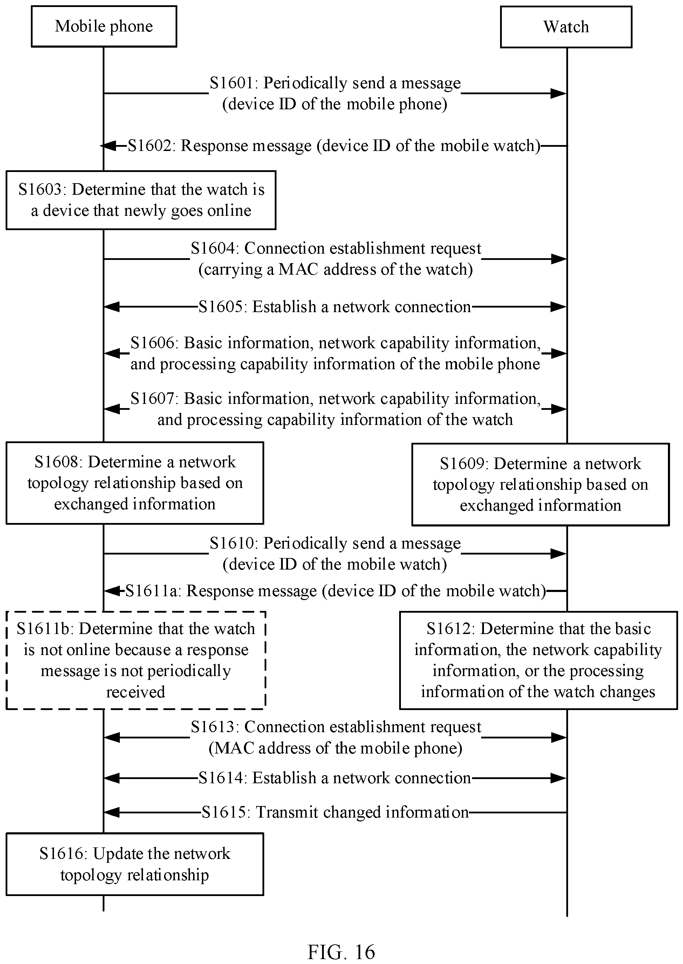

To better describe the method provided in this embodiment of this application, the following uses an example with reference to a specific example for description. As shown in FIG. 16, a mobile phone and a watch are used as an example.

S1601: The mobile phone periodically sends a message in a background, where the message carries a device ID of the mobile phone. The watch can receive the message from the mobile phone through Bluetooth or WiFi.

Certainly, the message in S1601 may further carry an account and various types of flag bits.

S1602: After receiving the message sent by the mobile phone, the watch replies with a response message to the mobile phone, where the response message includes a device ID of the watch.

Alternatively, in S1602, the response message may further include an account of the watch and various types of flag bits.

If the message sent by the mobile phone in S 1601 carries the device ID of the mobile phone, the response message returned by the watch in S1602 carries the device ID of the watch. If the message sent by the mobile phone in S1601 carries the device ID, the account, and various types of flag bits of the mobile phone, the corresponding message replied by the watch in S1602 may carry the device ID, the account, and various types of flag bits of the watch.

S1603: The mobile phone determines, based on the device ID of the watch that is carried in the response message replied by the watch, that the watch is a newly online device, and that the mobile phone has not established a network connection to the watch before.

In a possible implementation, before S1601, a user binds the mobile phone to the watch, for example, by using a PIN code, a QR code, or the like. In this way, before S1601, the mobile phone determines that the watch is a trusted device.

In another possible implementation, when the response message in S1602 includes the account of the watch, the mobile phone determines whether the account of the watch is the same as the account of the mobile phone, and if the account of the watch is the same as the account of the mobile phone, the mobile phone may determine that the watch is a trusted device.

S1604: The mobile phone sends a connection establishment request to the watch, where the connection establishment request carries the MAC address of the watch.

Because the watch is a trusted device, the mobile phone may learn the MAC address of the watch.

S1605: The mobile phone and the watch establish a network connection, for example, a Bluetooth connection, and perform mutual authentication.

S1606: The mobile phone sends basic information, network capability information, and processing capability information of the mobile phone to the watch by using the established network connection. The watch stores the information about the mobile phone.

For example, that the mobile phone sends the basic information of the mobile phone to the watch may be:

```
          {NetworkId: 4b3d-4535-6b35-f246//Uniquely identify a network device
          DeviceId: 4b3d-4535-6b35-f246//Device identifier
          DeviceName: kk's phone//Mobile phone whose device name is kk
          DeviceType: 00E//The device type is mobile phone
          Weight: 100 //Weight of the current device, which is
calculated based on the network capability and type
 of a node
          Role: central node//Device role
          SwVersion: v1.0//System version number
          }
```

For example, that the mobile phone sends the network capability information of the mobile phone to the watch may be:

```
          NetworkCapabilities //Network connection supported by the electronic device
              { ble, WiFi-P2P, WiFi-LAN}
          MaxBandWidth{ble:1M; WiFi-LAN:100M; WiFi-P2P:200M}//Maximum bandwidth supported by the
          network connection
              ConnectionInfo //Connection information of
the network connection supported by the electronic
 device
              {ble:
          { mac address:xx-16-xx-xx-xx-xx
          ip address: 192.168.x.x;
          port: 5666}
          //MAC address, IP address, and port number of ble
          }
          {WiFi-P2P:
          { mac address:xx-15-xx-xx-xx-xx
          ip address: 192.167.x.x;
          port: 5665}
          //MAC address, IP address, and port number of WiFi-P2P
          }
          { WiFi-LAN:
          { mac address:xx-17-xx-xx-xx-xx
          ip address: 192.163.x.x;
          port: 5658}
          //MAC address, IP address, and port number of the WiFi-LAN
          }
```

The processing capability information sent by the mobile phone to the watch is used to indicate a processing capability of the mobile phone. The watch compares the processing capability indicated by the processing capability information sent by the mobile phone with the processing capability of the watch, and finds that the processing capability of the mobile phone is stronger than the processing capability of the watch. In this case, the watch may determine that the role (Role) of the watch is an ordinary node.

In a possible implementation, if the mobile phone does not receive basic information and network capability information that are sent by another device, that is, the topology information is empty in this case, the mobile phone may further send, in S1606, the topology information that is empty to the watch, or may not send the topology information.

S1607: The watch sends the basic information, the network capability information, and the processing capability information of the watch to the mobile phone by using the established Bluetooth connection. The mobile phone stores the information about the watch.

For example, that the watch sends the basic information of the watch to the mobile phone may be:

```
          {NetworkId: 4d3b-4535-6c37-f243//Uniquely identify a network device
          DeviceId: 4d3b-4535-6c37-f243//Device identifier
          DeviceName: kk's watch//Watch whose device name is kk
          DeviceType: 06D//The device type is watch
          Weight: 40 //Weight of the current device, which is
calculated based on the network capability and type of
 a node
          Role: central node//Device role
          SwVersion: v1.1//System version number
          }
```

For example, that the watch sends the network capability information of the watch to the mobile phone may be:

```
          NetworkCapabilities //Network connection supported by the electronic device
           { ble }
          MaxBandWidth{ble:1M}//Maximum bandwidth supported by the network connection
          ConnectionInfo //Connection information of the
network connection supported by the electronic device
             {ble:
          { mac address:xx-16-xx-xx-xx-xx
          ip address: 192.168.x.x;
          port: 5666}
          //MAC address, IP address, and port number of ble
          }
```

In a possible implementation, S1607 is performed after S1606. To be specific, in this case, the watch has determined, based on the processing capability information sent by the mobile phone, that the watch is an ordinary node. In this case, in S1607, the role information (Role) sent by the watch is an ordinary node.

In another possible implementation, S1607 and S1606 are simultaneously performed. To be specific, the watch does not know the processing capability information of the mobile phone. In S1607, the role information (Role) sent by the watch is a central node.

After receiving the processing capability information of the watch in S1607, the mobile phone compares the processing capability indicated by the processing capability information of the watch with the processing capability of the mobile phone. The mobile phone determines that the processing capability of the mobile phone is higher than the processing capability of the watch, and the mobile phone determines the mobile phone as the central node.

Exchange of basic information, network capability information, and processing information between the mobile phone and the watch is completed by performing S1606 and S1607.

After performing S1606 and S1607, the mobile phone and the watch may disconnect the Bluetooth connection used for information exchange, or certainly may not disconnect the Bluetooth connection.

S1608: The mobile phone may determine a network topology relationship based on exchanged information.

S1609: The watch may determine a network topology relationship based on exchanged information.

In an alternative manner of S1609, after performing S1608, the mobile phone may send the determined network topology relationship to the watch. For example, if Bluetooth between the mobile phone and the watch is in a connected state, the network topology relationship is sent by using Bluetooth between the mobile phone and the watch. If there is no network connection in a connected state between the mobile phone and the watch, any network connection supported by both the mobile phone and the watch may be established, and the mobile phone sends the network topology relationship to the watch by using the established network connection.

For example, with reference to the examples in S1606 and S1607, the network topology relationship determined by the mobile phone and the watch is:

```
          List{
             watch info
              {NetworkId: 4d3b-4535-6c37-f243//Uniquely identify a network device
          DeviceId: 4d3b-4535-6c37-f243//Device identifier
          DeviceName: kk's watch//Device name
          DeviceType: 0f09c//Device type
          Weight: 40 //Weight of the current device, which is
calculated based on the network capability and type of
 a node
          Role: ordinary node //Device role
          SwVersion: v1.1//System version number
          }
            Phone info
           {NetworkId: 4b3d-4535-6b35-f246//Uniquely identify a network device
          DeviceId: 4b3d-4535-6b35-f246//Device identifier
          DeviceName: kk's phone//Device name
          DeviceType: 0x09c//Device type
          Weight: 100 //Weight of the current device, which
is calculated based on the network capability and type
          of a node
          Role: central node//Device role
          SwVersion: v1.0//System version number
          }
          ConnectAbility Table
          {
                  {
                     Source :phone
          Target: watch
          {
          Route: ble//A Bluetooth connection is supported
          MaxBandWidth: 1M//Maximum bandwidth supported by a Bluetooth connection
          }
```

S1610: The mobile phone periodically sends a message, where the message carries the device ID of the mobile phone.

Content included in the message periodically sent by the mobile phone in S1610 may also be the same as content carried in the message in S1601. This is not limited in this embodiment of this application.

S1611a: After receiving the message sent by the mobile phone, the watch replies with a response message, where the response message carries the device ID of the watch.

After S1610 and S1611, the mobile phone may periodically or regularly send a broadcast message, and the watch and the mobile phone may confirm that they are online to each other.

After the mobile phone and the watch exchange information for the first time, the mobile phone may continue to periodically send a broadcast message, to determine whether the watch is online. The watch may send only the response message indicating that the device is online, and does not need to send the basic information and the network capability information of the watch. When the basic information and/or the network capability information of the watch change/changes, the watch sends the changed basic information and/or the changed network capability information of the watch to the peer end. Specifically, when the basic information and/or the network capability information of the watch change/changes, the watch may establish, to the mobile phone, any network connection supported by both the mobile phone and the watch, and send the changed basic information and/or the changed network capability information.

S1611b: If the watch cannot receive the message sent by the mobile phone, and does not reply with a response message, and the mobile phone periodically (for example, 5 minutes) cannot receive the response message discovered by the watch, the mobile phone may determine that the watch is not online.

In a possible implementation, when determining that the watch is not online, the mobile phone may delete the information about the watch from the network topology relationship, and change "O" in Table 3 to "X"; or if the mobile phone does not receive a response message from the watch after sending a message for a plurality of times, and a quantity of times is greater than a preset value, the mobile phone deletes the information about the watch from the network topology relationship.

In another possible implementation, when determining that the watch is not online, the mobile phone may not delete the information about the watch in the network topology relationship, but continue to store the information. When the watch goes online next time, only changed information needs to be exchanged, and unchanged information does not need to be exchanged.

The mobile phone continues to perform S1610. When the watch can receive, again, the message sent by the mobile phone, the watch performs S1611a.

S1612: The watch determines that the basic information, the network capability information, or the processing information of the watch changes, and when the watch performs S1611a, the watch may perform S1612.

S1613: The watch sends a connection establishment request message, where the connection establishment request message carries the MAC address of the mobile phone.

S1614: The watch and the mobile phone establish a network connection, for example, a Bluetooth connection, and perform mutual authentication.

S1615: The watch transmits the changed information by using the established Bluetooth connection.

Certainly, according to a specific implementation design, if the mobile phone deletes the information about the watch after determining that the watch is not online, in S1615, the watch may transmit the basic information, the network capability information, and the processing information of the watch by using the established network connection.

S1616: The mobile phone updates, based on changed information, the network topology relationship determined in S1608.

Certainly, the watch also updates, based on changed information of the watch, the network topology relationship determined in S1609.

In S1616, the mobile phone may also update the network topology relationship after receiving changed information of a plurality of devices, which is not limited to updating the network topology relationship when only the changed information of the watch is received.

The mobile phone stores a network topology relationship between the mobile phone and the watch. After a table lamp is newly brought online, information sent by the table lamp to the mobile phone is basically consistent with information sent by the watch to the mobile phone. The mobile phone updates the network topology relationship based on the information sent by the table lamp. A difference is that the mobile phone may send, to the table lamp, the network topology relationship between the mobile phone and the watch that is stored by the mobile phone. In this way, the table lamp may determine a new network topology relationship based on information about the table lamp and the network topology relationship sent by the mobile phone.

After S 1601 to S1616, the mobile phone and the watch determine a network topology relationship. When the mobile phone needs to transmit data to the watch, the mobile phone determines, based on the determined network topology relationship, that Bluetooth transmission is performed from the mobile phone to the watch. When the mobile phone determines that Bluetooth is being connected to the watch, the mobile phone transmits data to the watch by using Bluetooth that is being connected. When Bluetooth is not connected, the mobile phone establishes a Bluetooth connection to the watch, and transmits data by using the established Bluetooth connection.

It should be noted that, in this embodiment of this application, the information exchanged by the electronic devices may include one or more pieces of information, and specific information to be exchanged is designed based on a requirement. In addition, the information exchanged by the electronic devices may be exchanged once or for a plurality of times. For example, basically unchanged information may be exchanged once, and frequently changed information may be exchanged after being changed. This is not limited in this application.

It should also be noted that, as described above in this embodiment of this application, network topology relationships stored in all of the plurality of electronic devices are consistent. Certainly, network topology relationships stored in all of the plurality of electronic devices may also be inconsistent. In this way, each electronic device may determine a next-hop node for data transmission by using the network topology relationship stored in the electronic device, and a first node does not need to perform global planning.

Networking in this embodiment of this application is defined as follows: There are a plurality of electronic devices that have a trust relationship within a range in which a signal such as Bluetooth or WiFi can be detected. One device maintains a logical connection to another device, and statuses and information of these electronic devices may be synchronized when a system runs. These trusted electronic devices form a network. Based on the networking, a service can discover the connection insensibly. When a service request is sent, the service can be directly initiated without waiting for a discovery connection authentication process.

Therefore, according to the method in this embodiment of this application, different connected networks may be networked at a network layer, to form a network topology relationship. In this way, when any two devices in the network topology relationship communicate with each other, communication between the two electronic devices can be implemented based on the network topology relationship. The network topology relationship may include a network connection between any two of a plurality of electronic devices. In this way, when two devices transmit data, a transmission path is directly determined based on the network topology relationship. This avoids a delay caused when two electronic devices need to first discover one or more modes of network connection between the two electronic devices and then select a proper network connection from the one or more network connection modes for establishment, helps reduce a data transmission delay, and can systematically plan a connection relationship between devices. In addition, the network topology relationship may be updated in real time based on information about electronic devices in a network, so that real-time performance can be ensured.

It may be understood that, to implement the foregoing functions, each electronic device includes a corresponding hardware structure and/or software module for implementing the functions. Algorithm steps in the examples described with reference to embodiments disclosed in this specification can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application with reference to embodiments, but it should not be considered that the implementation goes beyond the scope of this application.

In this embodiment, the electronic device may be divided into function modules based on the foregoing method examples. For example, each function module may be obtained through division based on each corresponding function, for example, a determining unit and a transmission unit, or two or more functions may be integrated into one processing module. The integrated module may be implemented in a form of hardware. It should be noted that, in embodiments, division into the modules is an example, and is merely logical function division. During actual implementation, another division manner may be used.

It should be noted that, all related content of steps in the foregoing method embodiments may be cited in function descriptions of corresponding function modules. Details are not described herein again.

The electronic device provided in this embodiment is configured to perform the foregoing data transmission method, and therefore can achieve a same effect as the foregoing implementation method.

When an integrated unit is used, each electronic device may further include a processing module, a storage module, and a communications module. The processing module may be configured to control and manage an action of the electronic device. The storage module may be configured to support the electronic device to store program code, data, and the like. The communications module may be configured to support communication between the electronic device and another device.

The processing module may be a processor or a controller. The processor may implement or perform various example logical blocks, modules, and circuits described with reference to content disclosed in this application. The processor may be alternatively a combination for implementing a computing function, for example, a combination including one or more microprocessors or a combination of digital signal processing (digital signal processing DSP) and a microprocessor. The storage module may be a memory. The communications module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment may be a device having the structure shown in FIG. 1.

This embodiment further provides a computer storage medium. The computer storage medium stores computer instructions. When the computer instructions are run on an electronic device, the electronic device is enabled to perform the related method steps, to implement the data transmission method in the foregoing embodiments.

This embodiment further provides a computer program product. When the computer program product runs on a computer, the computer is enabled to perform the foregoing related steps, to implement the data transmission method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the data transmission method in the foregoing method embodiments.

The electronic device, the computer storage medium, the computer program product, or the chip provided in embodiments is configured to perform a corresponding method provided above. Therefore, for beneficial effects that can be achieved by the electronic device, the computer storage medium, the computer program product, or the chip, refer to beneficial effects of the corresponding method provided above. Details are not described herein again.

Based on the foregoing descriptions of the implementations, a person skilled in the art may understand that for the purpose of convenient and brief descriptions, division into the foregoing function modules is merely used as an example for description. In actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatuses and methods may be implemented in other manners. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and is sold or used as an independent product, the integrated unit may be stored in a readable storage medium. Based on such an understanding, the technical solutions in embodiments of this application essentially, or the part contributing to the conventional technology, or all or a part of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
determining, by a first electronic device in a plurality of electronic devices based on a network topology relationship, information about a path for transmitting first data to a second electronic device in the plurality of electronic devices and a mode of network connection between two adjacent electronic devices on a transmission path indicated by the path information, wherein the path information is used to indicate an electronic device through which the first electronic device transmits the first data to the second electronic device, and the network topology relationship comprises the plurality of electronic devices and a mode of network connection between the plurality of electronic devices; and
transmitting, by the first electronic device, the first data to the second electronic device based on the path information and the mode of network connection between two adjacent electronic devices on the transmission path indicated by the path information.

2. The method according to claim 1, wherein before the determining, by a first electronic device in a plurality of electronic devices based on a network topology relationship, information about a path for transmitting first data to a second electronic device in the plurality of electronic devices and a mode of network connection between two adjacent electronic devices on a transmission path indicated by the path information, the method further comprises:
obtaining, by the first electronic device, basic information of each electronic device in the plurality of electronic devices and network capability information of each electronic device; and
determining, by the first electronic device, the network topology relationship based on the basic information of each electronic device and the network capability information of each electronic device.

3. The method according to claim 2, wherein the basic information of each electronic comprises at least one of an identifier of the electronic device, a name of the electronic device, a network identifier of the electronic device, a type of the electronic device, weight information of the electronic device, role information of the electronic device, and version information of the electronic device.

4. The method according to claim 2 or 3, wherein the network capability information of each electronic device comprises at least one of a network connection supported by the electronic device, a bandwidth supported by the network connection supported by the electronic device, connection information of the network connection supported by the electronic device, a connection status of the network connection supported by the electronic device, and connected-state network connection time information.

5. The method according to any one of claims 2 to 4, wherein the obtaining, by the first electronic device, basic information of each electronic device in the plurality of electronic devices and network capability information of each electronic device comprises:
establishing, by the first electronic device, a first network connection to a third electronic device in the plurality of electronic devices;
receiving, by the first electronic device by using the first network connection, basic information of the third electronic device and network capability information of the third electronic device that are sent by the third electronic device, or receiving, by using the first network connection, basic information of the third electronic device, network capability information of the third electronic device, basic information of a fourth electronic device in the plurality of electronic devices, and network capability information of the fourth electronic device that are sent by the third electronic device; and
sending, by the first electronic device, basic information of the first electronic device and network capability information of the first electronic device to the third electronic device by using the first network connection.

6. The method according to claim 5, wherein before the establishing, by the first electronic device, a first network connection to a third electronic device in the plurality of electronic devices, the method further comprises:
periodically sending, by the first electronic device, a message, wherein the message carries a device identifier of the first electronic device;
receiving, by the first electronic device, a response message sent by the third electronic device, wherein the response message is sent by the third electronic device after the third electronic device receives the message periodically sent by the first electronic device, and the response message carries a device identifier of the third electronic device; and
determining, by the first electronic device based on the device identifier of the third electronic device, that the third electronic device is online.

7. The method according to any one of claims 1 to 6, wherein the method further comprises:
obtaining, by the first electronic device, at least one of processing capability information of each electronic device in the plurality of electronic devices, network quality of each electronic device, and power information of each electronic device; and
the determining, by a first electronic device in a plurality of electronic devices based on a network topology relationship, information about a path for transmitting first data to a second electronic device in the plurality of electronic devices comprises:
determining, by the first electronic device based on the network topology relationship and the at least one of the processing capability information of each electronic device, the network quality of each electronic device, and the power information of each electronic device, the information about the path for transmitting the first data to the second electronic device.

8. The method according to any one of claims 1 to 7, wherein the transmitting, by the first electronic device, the first data to the second electronic device based on the path information and the mode of network connection between two adjacent electronic devices on the transmission path indicated by the path information comprises:
sending, by the first electronic device by using a second network connection, a first packet to a fifth electronic device adjacent to the first electronic device on the transmission path, wherein a packet body of the first packet comprises the first data, and a packet header of the first packet comprises the path information and the mode of network connection between two adjacent electronic devices on the transmission path indicated by the path information, so that the fifth electronic device determines a next-hop node on the transmission path and a mode of network connection between the fifth electronic device and the next-hop node, wherein
the packet header of the first packet further comprises at least one of a source address, a destination address, a service identifier, and a service type, the source address is an address of the first electronic device, and the destination address is an address of the second electronic device.

9. The method according to any one of claims 1 to 7, wherein the transmitting, by the first electronic device, the first data to the second electronic device based on the path information and the mode of network connection between two adjacent electronic devices on the transmission path indicated by the path information comprises:
sending, by the first electronic device by using a second network connection, network connection indication information to a fifth electronic device adjacent to the first electronic device on the transmission path, wherein the network connection indication information is used to indicate a mode of network connection between two adjacent electronic devices other than the first electronic device on the transmission path, so that the fifth electronic device determines a mode of network connection to a next-hop node, and the fifth electronic device is a next-hop node adjacent to the first electronic device on the transmission path; and
sending, by the first electronic device, a second packet to the fifth electronic device by using the second network connection, wherein a packet header of the second packet comprises the path information, and a packet body of the second packet comprises the first data; and
the packet header of the second packet further comprises at least one of a source address, a destination address, a service identifier, and a service type, the source address is an address of the first electronic device, and the destination address is an address of the second electronic device.

10. The method according to claim 8 or 9, wherein the method further comprises:
determining, by the first electronic device, whether the established second network connection exists between the first electronic device and the fifth electronic device; and
if the second network connection does not exist, establishing, by the first electronic device, the second network connection to the fifth electronic device; or
if the established second network connection exists, sending, by the first electronic device by using the second network connection, the first packet to the fifth electronic device adjacent to the first electronic device on the transmission path, or sending, by the first electronic device by using the second network connection, the network connection indication information to the fifth electronic device adjacent to the first electronic device on the transmission path.

11. The method according to any one of claims 1 to 10, wherein after the determining, by a first electronic device in a plurality of electronic devices by using a network topology relationship, information about a path for transmitting first data to a second electronic device in the plurality of electronic devices and a mode of network connection between two adjacent electronic devices on a transmission path indicated by the path information, the method further comprises:
obtaining, by the first electronic device, motion information of each electronic device; and
skipping updating, by the first electronic device, the network topology relationship if the first electronic device determines, based on the motion information of each electronic device, that an electronic device having an accelerated motion exists.

12. The method according to any one of claims 1 to 11, wherein after the determining, by a first electronic device in a plurality of electronic devices based on a network topology relationship, information about a path for transmitting first data to a second electronic device in the plurality of electronic devices and a mode of network connection between two adjacent electronic devices on a transmission path indicated by the path information, the method further comprises:
obtaining, by the first electronic device, basic information of at least one sixth electronic device different from the plurality of electronic devices; and determining, by the first electronic device, a quantity of the at least one added sixth electronic device based on the basic information of the at least one sixth electronic device; and
updating, by the first electronic device, the network topology relationship if the quantity of the at least one added sixth electronic device is greater than a preset quantity.

13. The method according to any one of claims 1 to 12, wherein after the determining, by a first electronic device in a plurality of electronic devices by using a network topology relationship, information about a path for transmitting first data to a second electronic device in the plurality of electronic devices and a mode of network connection between two adjacent electronic devices on a transmission path indicated by the path information, the method further comprises:
obtaining, by the first electronic device, service set identifiers SSIDs sent by at least some of the plurality of electronic devices;
determining, by the first electronic device based on the SSIDs of the at least some electronic devices, whether an electronic device whose scenario changes exists in the plurality of electronic devices; and
if there is an electronic device whose scenario changes, updating, by the first electronic device, the network topology relationship.

14. The method according to any one of claims 1 to 13, wherein after the determining, by a first electronic device in a plurality of electronic devices by using a network topology relationship, information about a path for transmitting first data to a second electronic device in the plurality of electronic devices and a mode of network connection between two adjacent electronic devices on a transmission path indicated by the path information, the method further comprises:
obtaining, by the first electronic device, a quantity of offline electronic devices; and
if the quantity of offline electronic devices meets a preset quantity, deleting, by the first electronic device, basic information and network capability information of the offline electronic device in the network topology relationship.

15. The method according to any one of claims 1 to 14, wherein before the determining, by a first electronic device in a plurality of electronic devices based on a network topology relationship, information about a path for transmitting first data to a second electronic device in the plurality of electronic devices and a mode of network connection between two adjacent electronic devices on a transmission path indicated by the path information, the method further comprises:
obtaining, by the first electronic device, service information of the second electronic device, wherein the service information of the second electronic device is used to indicate a service supported by the second electronic device; and
determining, by the first electronic device, to send the first data corresponding to the service information to the second electronic device based on the service information of the second electronic device.

16. A method for determining a network topology relationship, wherein the method comprises:
obtaining, by a first electronic device in a plurality of electronic devices, basic information of each electronic device in the plurality of electronic devices and network capability information of each electronic device; and
determining, by the first electronic device, the network topology relationship based on the basic information of each electronic device and the network capability information of each electronic device.

17. The method according to claim 16, wherein the basic information of each electronic device comprises at least one of an identifier of the electronic device, a name of the electronic device, a network identifier of the electronic device, a type of the electronic device, weight information of the electronic device, role information of the electronic device, and version information of the electronic device.

18. The method according to claim 16 or 17, wherein the network capability information of each electronic device comprises at least one of a network connection supported by the electronic device, a bandwidth supported by the network connection supported by the electronic device, connection information of the network connection supported by the electronic device, a connection status of the network connection supported by the electronic device, and connected-state network connection time information.

19. The method according to any one of claims 16 to 18, wherein the obtaining, by a first electronic device, basic information of each electronic device in the plurality of electronic devices and network capability information of each electronic device comprises:
establishing, by the first electronic device, a first network connection to a third electronic device in the plurality of electronic devices;
receiving, by the first electronic device by using the first network connection, basic information of the third electronic device and network capability information of the third electronic device that are sent by the third electronic device, or receiving, by using the first network connection, basic information of the third electronic device, network capability information of the third electronic device, basic information of a fourth electronic device in the plurality of electronic devices, and network capability information of the fourth electronic device that are sent by the third electronic device; and
sending, by the first electronic device, basic information of the first electronic device and network capability information of the first electronic device to the third electronic device by using the first network connection.

20. The method according to claim 19, wherein before the establishing, by the first electronic device, a first network connection to a third electronic device in the plurality of electronic devices, the method further comprises:
periodically sending, by the first electronic device, a message, wherein the message carries a device identifier of the first electronic device;
receiving, by the first electronic device, a response message sent by the third electronic device, wherein the response message is sent by the third electronic device after the third electronic device receives the message periodically sent by the first electronic device, and the response message carries a device identifier of the third electronic device; and
determining, by the first electronic device based on the device identifier of the third electronic device, that the third electronic device is online.

21. An electronic device, comprising one or more processors, a memory, a module on which a plurality of applications are installed, and one or more programs, wherein the one or more programs are stored in the memory, and when the one or more programs are executed by the processor, the electronic device is enabled to perform the method according to any one of claims 1 to 15 or the method according to any one of claims 16 to 20.

22. A computer readable storage medium, wherein the computer readable storage medium stores computer instructions, and when the computer instructions are run on an electronic device, the electronic device is enabled to perform the method according to any one of claims 1 to 15 or the method according to any one of claims 16 to 20.
